# EUROPEAN PATENT SPECIFICATION

(11) **EP 2 310 714 B1**
(45) Date of publication and mention of the grant of the patent: **02.05.2018**
(21) Application number: 08875901.4
(22) Date of filing: 23.12.2008
(51) Int. Cl.: F16D 69/02, C04B 35/00, F16D 65/092

(54) **BRAKE PAD FOR BRAKING SYSTEMS, IN PARTICULAR FOR DISC BRAKES**
BREMSBELAG FÜR BREMSSYSTEME, INSBESONDERE FÜR SCHEIBENBREMSEN
PATIN DE FREIN POUR SYSTÈMES DE FREINAGE, EN PARTICULIER POUR FREINS À DISQUE

(30) Priority: 08.08.2008 WO PCT/IT2008/000543
(43) Date of publication of application: 20.04.2011
(73) Proprietor: Freni Brembo S.p.A., 24035 Curno (Bergamo) (IT)
(72) Inventor: TURANI, Simone, I-24128 Bergamo (IT); VIKULOV, Konstantin, I-24124 Bergamo (IT); GAVAZZI, Andrea, I-24123 Bergamo (IT); VALLE, Massimiliano, I-24125 Bergamo (IT); VAVASSORI, Paolo, I-24125 Bergamo (IT); ORLANDI, Marco, I-20038 Seregno, Milano (IT)
(74) Representative: Mitola, Marco
(86) International application number: PCT/IB2008/055519
(87) International publication number: WO 2010/015897

(56) References cited:
- EP-A- 0 699 728
- WO-A-02/090792
- GB-A- 781 686
- GB-A- 2 058 259
- US-A- 5 128 494
- US-A- 5 635 250

## Description

### Field of application

This invention concerns a brake pad for braking systems, in particular for disc brakes.

### State of the art

As is well known, a brake pad for braking systems, in particular for disc brakes, generally consists of a metal support plate associated with a layer of friction material which defines the tribologically active part of the brake pad.

Traditionally the friction material is connected to the plate with glue or by means of mechanical fixings, such as bolts or rivets.

The metal plate essentially carries out a function of mechanical support for the friction material and is suitable for bearing the compression and bending stresses typically encountered during use of the brake.

The plate cooperates with the actuating means (hydraulic pistons) of the braking system to permit movement of the brake pad. In correspondence to the plate seats for brake pad guiding pins and for the friction material wear indicators are also made.

As is well known, weight reduction of the brake pads is much sought after, especially for braking systems to be installed on high performance vehicles (e.g. top range cars or motorbikes) which can be used in racing and therefore subjected to considerable stresses.

From this viewpoint attempts have been made by working on the structure of the support plates, though these have been limited to brake pads with the friction portion made of organic material.

In fact brake pads for braking systems with friction portion in organic material are well known. They are built with support plates that have been lightened by making cuts or openings in them, or by inserting portions of metal mesh. By way of example we refer to French patent FR 2441100.

For some particular applications there are also brake pads without a support plate. However these pads are very costly, intended for the braking systems of competition cars and made completely in carbon which in itself can guarantee suitable resistance to mechanical stresses in operation.

As is well known, in creating the friction portions of pads for high performance braking systems (i.e. top of the range cars) the use of ceramic matrix materials has become increasingly widespread. This is essentially due to the fact that ceramic matrix friction materials - compared with friction materials obtained for example by sinterisation of metal powders - not only give good performances in terms of friction coefficient and resistance to wear but also, because of their thermal refractoriness, reduce heat transmission from the disc to the hydraulic braking system.

However, at time of writing it has not been possible to considerably reduce the weight of pads made by using the abovementioned ceramic matrix friction materials.

As is known, the ceramic matrix materials used to date do not have particularly high properties of mechanical resistance. In general, they are in fact very fragile and they fail suddenly by collapsing.

This has impeded not only the creation of pads entirely constituted of ceramic matrix material, without a support plate or element, but also the use of lightened metal support plates.

The use of lightened support plates would not in fact guarantee the pad adequate mechanical resistance. To this it must be added that the traditional way of fixing the plate to the layer of friction material - by gluing and/or by mechanical means of fixing - require the plate to have an adequate area of contact with the friction material.

The limits of mechanical resistance mentioned above are also found in ceramic matrix materials made according to the production technique based on polymer pyrolysis.

As is known, the technique of polymer pyrolysis is becoming increasingly widespread in the creation of ceramic matrix materials. Compared with other techniques the pyrolysis technique offers various advantages from both the strictly operational viewpoint and the characteristics of the final product.

More in detail, this technique involves a process of heating a mixture of siliconic ceramic precursors (normally organic siliconic polymers, such as polysilanes, polycarbosilanes, polysilazanes and polysiloxanes) and appropriate fillers in a controlled or inert atmosphere (e.g. argon flow) at temperatures greater than 800°C to achieve the passage from organic to inorganic polymeric structure, with the formation of silicon oxycarbides (SiOC) and/or silicon carbides or nitrides (SiC or Si₃N₄). The above precursors normally have high ceramic yields: more than 50% of initial polymer weight is maintained in the final material.

In particular, compared with the fusion technique the pyrolysis technique allows better control of the form and purity of the final product and the possibility of working at lower temperatures (800 - 1500°C).

An example of the production process for friction material with ceramic matrix by means of polymeric pyrolysis is described in United States patent US 6062351. The friction material is made by setting out from a mixture of one or more organic ceramic precursors (carbosil-siliconic resin), reinforcing fibres (e.g. fibres of carbon, alumina, silicon nitride or carbide) and fillers (e.g. powders of silicon carbide, graphite, alumina, mullite, silica, titanium oxide, silicon or boron nitride). The mixture is then cold-compacted in a mould. There follows a heating step within the mould itself for polymerisation of the ceramic precursor and the obtaining of a green body. The green body then undergoes pyrolysis in an inert atmosphere at temperatures between 800°C and 1.100°C.

As is known, in the production of pads for disc brakes with the polymer pyrolysis technique, the friction portion in ceramic matrix material is made as an element in itself. At the end of the pyrolysis step the material then undergoes finishing processes and grinding before being joined, by gluing or mechanical means (e.g. bolts or rivets), to a support plate.

The friction portion cannot be made already directly joined to the metal support plate because the temperatures reached during the process of pyrolysis (above 800°C) would cause unacceptable deformations of the plate.

This limit of the current pyrolysis technique, as of the fusion technique, means that it is necessary to connect the friction material to the plate only at the end of the pyrolysis step. So in the production cycle a specific assembling step of the plate and the friction portion must be envisaged, a step that may be preceded by a step of grinding and finishing of the friction portion.

The ways of connecting the support plate (by gluing or mechanical means of fixing), together with the far from excellent mechanical resistance properties of the ceramic matrix materials employed, therefore contribute to considerably limiting - if not wholly excluding - the possibility of reducing the weight of the pads through intervention on the structure of the plates themselves.

Another limit of polymer pyrolysis applied to the production of ceramic matrix friction materials, and in particular to the production of friction portions for pads, is the need to operate with low heating velocity, this to the detriment of time schedules: the pyrolysis step alone may require ten of hours.

With this regard it is described in details a particular embodiment of the process described in the above mentioned US patent 6062351. The pyrolysis operational cycle envisages a first step of heating from ambient temperature to approximately 150°C at a velocity of around 2°C/min, followed by a second heating step to 400°C at a velocity of 0.4°C/min. The third and fourth heating steps are, respectively, to 760°C at a velocity of 0.18°C/min and to 870°C at a velocity of 0.46°C/min. The product is then maintained at 870°C for about 4 hours and then cooled to ambient temperature at a velocity of approximately 1.2°C per minute. The heating step requires an overall time of approximately 48 hours and the cooling step about 12 hours.

Low heating velocities are necessary during the pyrolysis step to limit damaging thermal stresses which, favouring the natural phenomenon of material shrinkage and the formation of microporosity due to the release of volatile organic substances during pyrolysis, would lead to the formation of micro cracks, with the risk of the finished product collapsing.

EP 699728 A1 discloses a friction material having as a binder component a binder composition defined by a mixture of a thermosetting resin, a ceramic precursor (organometallic compound, and in particular an organic silicon compound) and a catalyst.

### Presentation of the invention

The purpose of this invention is therefore to eliminate the drawbacks of the abovementioned state of the art by providing a brake pad for braking systems, in particular for disc brakes, which, though it is made with at least the friction portion in ceramic matrix material, has a considerably reduced weight but without compromising mechanical resistance.

A further purpose of this invention is to provide a brake pad for braking systems that is completely in ceramic matrix friction material and therefore without support plates, this without compromising mechanical resistance.

### Brief description of the drawings

The technical features of the invention in accordance with the abovementioned purposes can be clearly grasped from the claims listed below, and its advantages will be rendered more evident by the following detailed description, given with reference to the attached drawings which represent one or more embodiments, purely by way of example and not limitative, in which:
- Figure 1 shows a perspective view of a brake pad for braking systems with ceramic matrix friction material, made according to a first embodiment of the invention;
- Figure 1a shows a plan view of a brake pad for braking systems with ceramic matrix friction material, made according to a variant of the first general embodiment illustrated in Figure 1;
- Figure 1b shows a section view of the brake pad illustrated in Figure 1a along the line II - II therein;
- Figure 1c shows a perspective view of the brake pad illustrated in Figure 1a;
- Figure 2 shows a perspective view of a brake pad for braking systems with ceramic matrix friction material, made according to a second embodiment of the invention;
- Figure 3 shows an exploded view of a support element used for creating a brake pad according to a particular embodiment of the invention;
- Figure 4 shows a plan view of the brake pad illustrated in Figure 2, from the side opposite the tribologically active one;
- Figure 5 shows a section view of the brake pad illustrated in Figure 4 along the line V - V therein;
- Figure 6 shows a plan view of a brake pad made according to a first alternative embodiment of the invention, from the side opposite the tribologically active one;
- Figure 7 shows a section view of the brake pad illustrated in Figure 6 along line VII - VII therein;
- Figure 8 shows a plan view of the brake pad made according to a second alternative embodiment of the invention, from the side opposite the tribologically active one;
- Figure 9 shows a section view of the brake pad illustrated in Figure 8 along the line IX - IX therein;
- Figure 10 shows a plan view of the brake pad made according to a third alternative embodiment of the invention, from the side opposite the tribologically active one;
- Figure 11 shows a section view of the brake pad illustrated in Figure 8 along the line XI - XI therein;
- Figures 12, 13 and 14 show a diagram of, respectively, a first, second and third form of application of the method according to the invention;
- Fig. 15 represents the trend of the friction coefficient in function of the number of brake applications for three ceramic matrix friction materials (of which two according to the invention) which differ in particular for the maximum temperature at which pyrolysis was carried out; and
- Fig. 16 represents the trend of the friction coefficient in function of the number of brake applications for a ceramic matrix friction material made according to a particular form of application of the method according to the invention.

### Detailed description

This invention concerns a brake pad for braking systems, in particular for disc brakes, which is made - at least for the friction portion - with a special ceramic matrix material having such properties of mechanical resistance as to permit intervention on the mechanical support portion with view to reducing the overall weight of the brake pad yet without compromising mechanical resistance.

Anticipating what will be set out in detail below, the properties of mechanical resistance of the abovementioned ceramic matrix material allow different embodiments for the brake pad in accordance with the invention, starting with a brake pad made entirely in the abovementioned material and therefore without metal support elements, right down to a brake pad with the friction portion in the abovementioned ceramic matrix material and the mechanical support portion made with a lightened support plate, with some intermediate embodiments in between.

In the attached Figures the brake pad in accordance with the invention is indicated as a whole by the number 1, while the friction portion and the mechanical support portion are indicated respectively by number 10 and number 20.

By "friction portion" 10 is meant the part of brake pad 1 which will be tribologically active throughout its working life, and therefore the part that will be progressively worn through use.

By "mechanical support portion" 20 is meant the part of brake pad 1 which will cooperate with the actuating means of the braking system (not illustrated in the attached Figures) to permit movement of brake pad 1 and to transfer braking power to said braking system (for example the calliper body of a disc brake). Support portion 20 is therefore the part that will mainly bear the mechanical stresses typically involved with the functioning of a braking system.

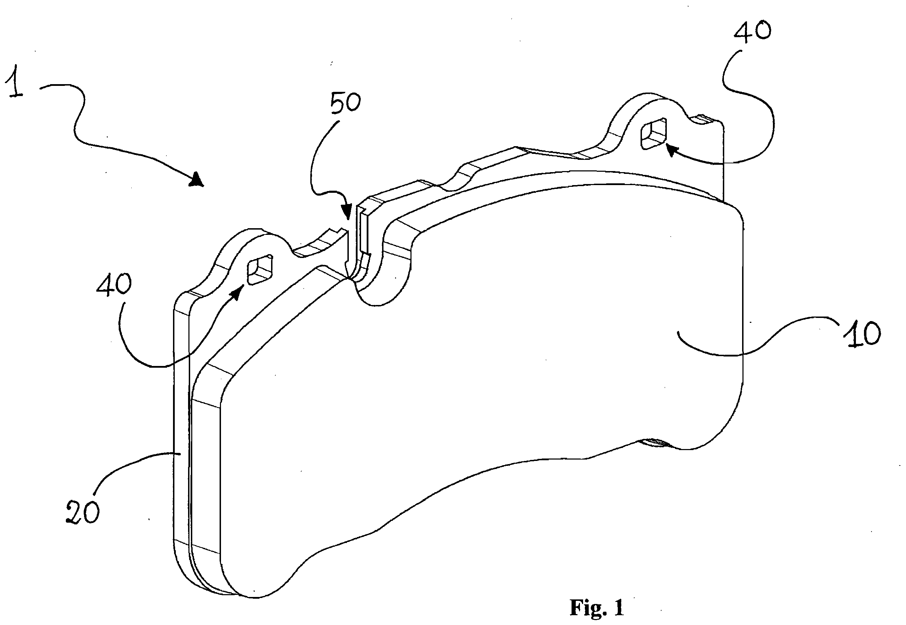

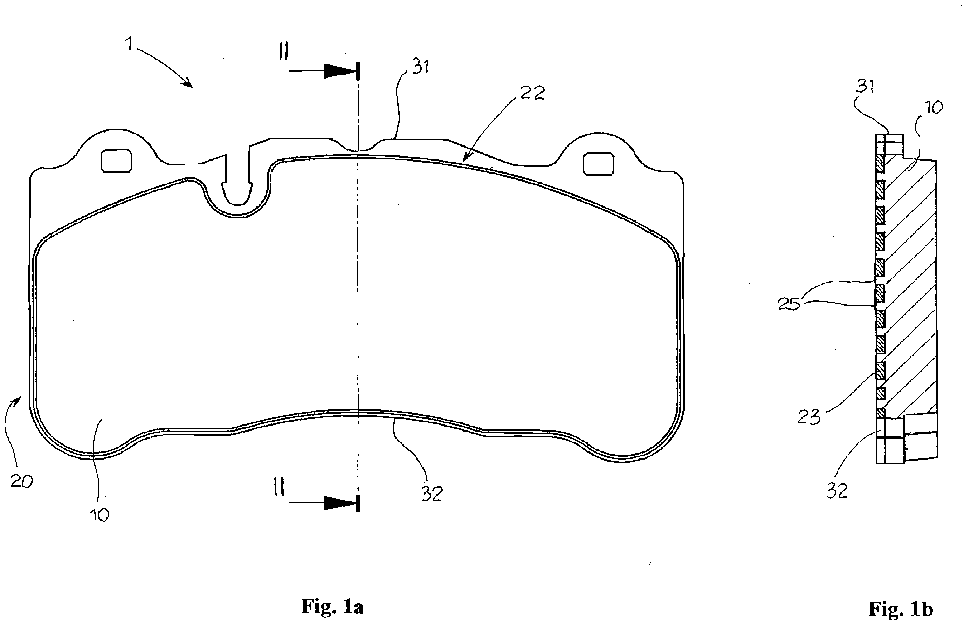

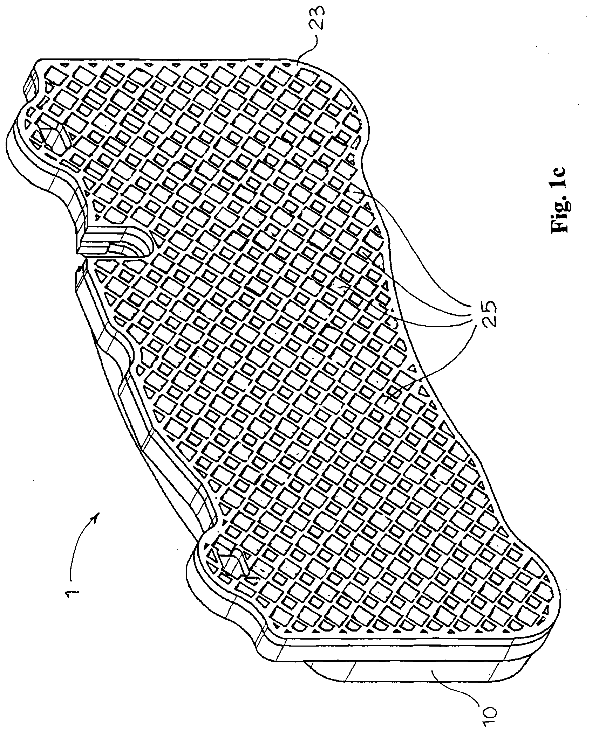

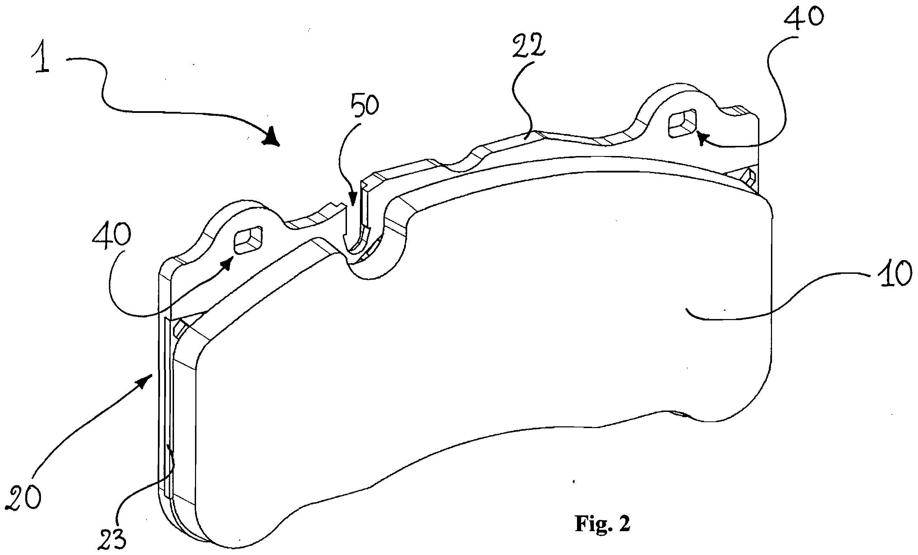

As illustrated in particular in Figures 1 and 2, in correspondence with support portion 20, seats 40 for the brake pad guide pins may be made, as well as seats 50 (where envisaged) for the wear indicators of friction portion 10.

As will be resumed in greater detail below, the ceramic matrix friction material by which at least friction portion 10 of brake pad 1 is made in accordance with the invention, not only has excellent mechanical resistance properties in terms of resistance to compression and of elastic module but may also be made in different variants, suitable for tribological cooperation with both brake discs in composite ceramic material (CCM) and with brake discs in grey cast iron, assuring excellent performances in terms of resistance to wear, of friction and of running-in (understood as the time taken to achieve optimal functioning conditions).

In particular, with regard to performances in terms of friction, it is pointed out that in comparison with traditional materials there is an increase in the mean value of the friction coefficient, correlated with its stability in time. It is further pointed out that the friction coefficient value at start of braking lies within the required operational intervals.

In accordance with the invention, the ceramic matrix material with which at least friction portion 10 of brake pad 20 is made is obtained through a method consisting of the following operational steps:
a) preparing a mixture of at least one siliconic type ceramic precursor, of particles of hard materials suitable as abrasives, of particles of substances suitable as lubricants and particles of metal materials;
b) hot-pressing the mixture to obtain a preformed body (green body);
c) submitting the preformed body (green body) to a process of pyrolysis in order to obtain ceramisation of the preceramic binder, thus obtaining a ceramic matrix material.

The mixture comprises a catalyst suitable for favouring reticulation of the ceramic precursor during the hot-pressing step.

A suitable catalyst in the initial mixture for the reactions of reticulation of the ceramic precursor (reactions of hydrolysis and condensation in the polymeric chain) permits achievement of a very high reticulation of the ceramic precursor already on completion of the pressing step, and therefore the creation of an extensive ramified polymeric structure within the preformed body (green body).

High reticulation of the precursor carries a series of advantages.

The preformed body (or green body) obtained at the end of the hot-pressing step has such properties of mechanical resistance as to make it easy to manipulate, with simplification of the subsequent working process steps.

The extensive ramified polymeric structure created during the pressing step has the effect of "keeping" the ceramic precursor molecules during the pyrolysis step, reducing their volatility and therefore increasing the ceramic yield.

This extensive ramified structure involves - at least partially - the particles of the additives present in the initial mixture (abrasives, lubricants, metals) which are thus incorporated into the structure itself, with advantages both in terms of performances (absolute value and stability of the friction coefficient) and of wear resistance, as will be resumed below.

The extensive ramified polymeric structure is maintained in the ceramic matrix material, although modified following the chemical-physical transformations induced by the pyrolysis process, and ensures that the final ceramic matrix material too will have good properties of mechanical resistance, with special reference to wear resistance, to the elastic module and to compressibility.

In accordance with another aspect characterising the invention, the pyrolysis process is carried out at temperatures below 800°C.

The good mechanical properties that the extensive ramified polymeric structure gives the preformed body (green body) mean that the degree of progress of the pyrolysis process (temperature and times) can be tailored as required. This in turn means that the degree of ceramisation in the final ceramic matrix material can be planned in function of the latter's performance characteristics.

As will be resumed below, it was surprisingly found that pyrolysis at temperatures below 800°C (and especially between 400°C and 600°C) results in considerable improvement in friction material performances.

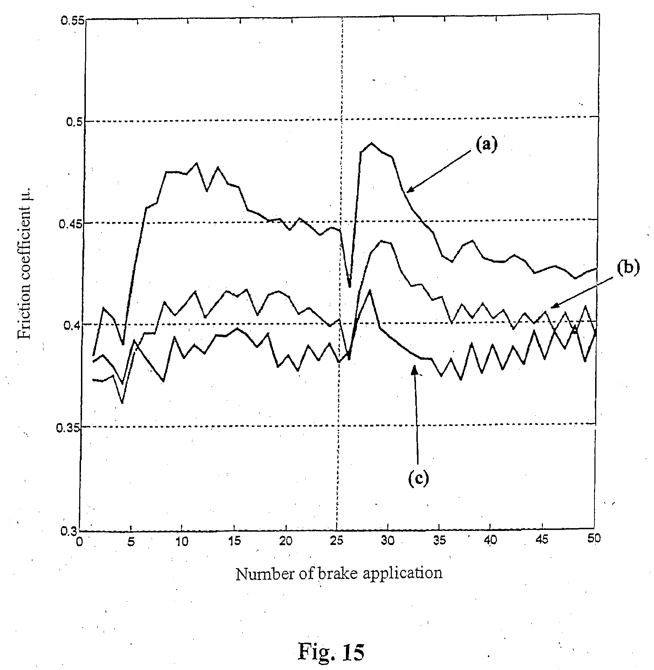

The graphs in Figure 15 show the results of braking tests (friction coefficient in function of number of braking operations) carried out on three different disc brake pads. Curves (a) and (b) refer to two brake pads made in accordance with the invention, with maximum pyrolysis temperatures of respectively 500°C and 700°C. Curve (c) refers to a traditional brake pad with maximum pyrolysis temperature of 900°C.

A comparison of the graphs shows the increase of the friction coefficient in the brake pads produced according to the invention, an increase that is more pronounced in the brake pads made with a pyrolysis temperature between 400°C and 600°C.

As for wear resistance, the tests showed that on average the brake pads produced according to the invention have greater resistance to wear: an average wear value of approximately 0.005 mm/braking operation as against an average value of approximately 0.015 mm/braking operation in traditional type brake pads (made with pyrolysis temperatures above 800°C).

As will be resumed below, carrying out pyrolysis (in accordance with the invention) at temperatures below 800°C, and in particular between 400°C and 600°C, makes it possible to co-press the basic mixture of the material with a support element (e.g. a lightened metal plate). The support plate (which may be metal but also non-metallic, such as composites based on oxides with low heat conductivity) can in fact bear the thermal stresses deriving from the pyrolysis process without undergoing unacceptable heat deformations.

Operationally it is therefore possible to directly associate the support plate with the preformed body and, therefore, with the ceramic matrix material during the production steps of the friction material. In this way it is no longer necessary in the production process to envisage a special final assembling step for the friction portion and the support element. At the end of the steps of creating the friction material we therefore have a friction material-plate unit which is easier to work for subsequent finishing and any application of mechanical means of fixing.

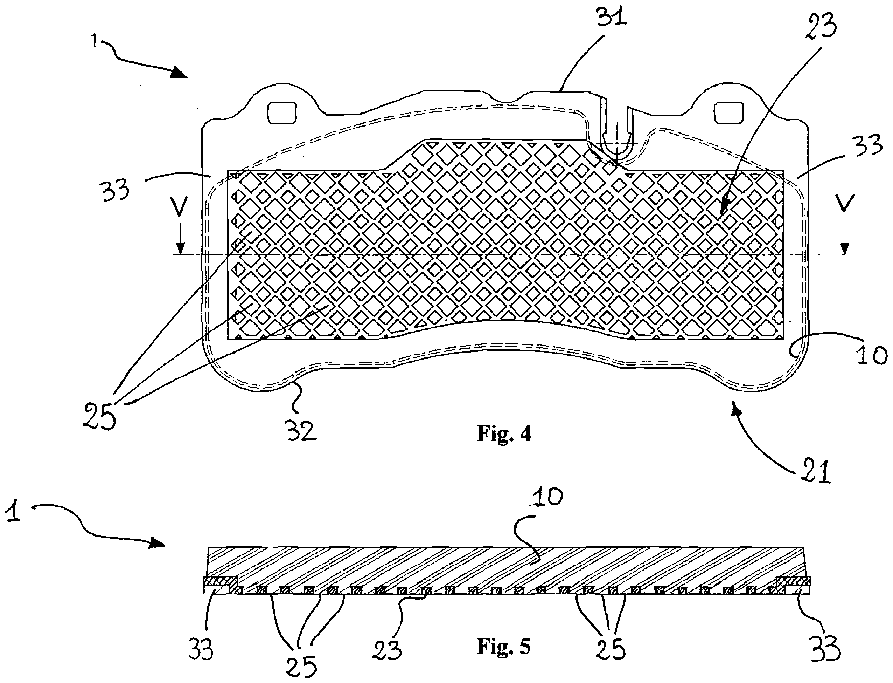

Anticipating what will be resumed below, co-pressing of the mixture directly on a support element with one or more lightening apertures creates a unit in which the ceramic matrix material is closely connected with the support element itself. During the co-pressing step the mixture - still fluid - penetrates the lightening apertures, creating a reciprocal grip relationship between ceramic matrix material and support element, as may be seen in particular from Figures 5, 7 and 9.

There follow detailed descriptions of some embodiments for brake pad 1 in accordance with the invention. Subsequently the production method for the ceramic matrix material will be described.

In accordance with a first general embodiment of the invention illustrated in Figure 1, brake pad 1 is made entirely of the abovementioned ceramic matrix friction material. Not only friction portion 10 but also mechanical support portion 20 is in this material.

Elimination of the traditional metal support plate considerably reduces the overall weight of the brake pad. The ceramic matrix material in accordance with the invention has a specific weight of around 3 kg/dm³, whereas steel (traditionally used for support plates) has a specific weight of around 7.8 kg/dm³. Sizes being equal, a brake pad in accordance with the invention may weigh as much as 1/3 less than a brake pad with traditional steel plate and the friction portion in a well known type of ceramic matrix material.

On this subject it is pointed out that already at the end of the pressing step (and therefore prior to the pyrolysis step) the preformed material has an excellent consistency which makes it possible to achieve good details, such as for example the sharp edges of the brake pad.

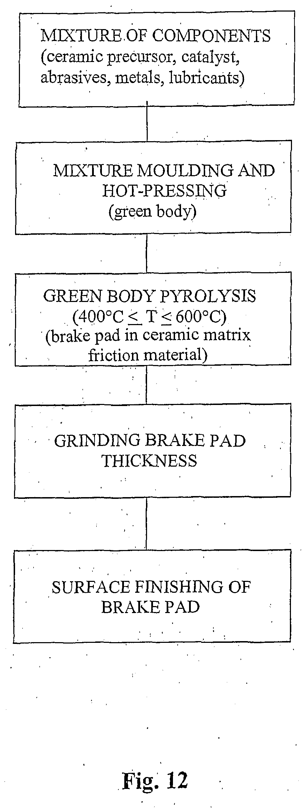

Preferably the mechanical support portion 20 is made as one piece with the friction portion 10, using an apposite mould. Figure 12 shows a diagram of the production steps of brake pad 1 as one piece.

Alternatively the two portions, friction portion 10 and mechanical support portion 20, can be made separately and joined subsequently in a specific assembling step, for example by gluing and/or application of mechanical fixing elements.

Advantageously, as envisaged in a special embodiment illustrated in Figures 1a, 1b and 1c, the brake pad 1, made entirely from the abovementioned ceramic matrix material, can be provided, in correspondence to mechanical support portion 20, with at least one open structure reinforcing element which allows penetration of the friction material.

Insertion of an open structure reinforcing element in any case reduces the weight of the brake pad in comparison with the use of a traditional plate, while making a greater contribution to the mechanical resistance of the brake pad itself.

The reinforcing element may cover the entire plane surface of the mechanical support portion (as shown in Figure 1c) or be limited to a part thereof, for example the plane surface of the friction portion.

The support element may be for example a plate-like body provided with lightening apertures, for example a reticular structure. Preferably the support element is metal (for example steel) although non-metal materials may be used such as for example composites based on oxides with low heat conductivity, able to maintain their form and structure without undergoing significant deformation when subject to the thermal stresses of the pressing and pyrolysis process.

The support element may be incorporated into the mechanical support portion or set on its external surface (as illustrated in Figure 1c), or again on the surface in correspondence to which the actuating means of the braking system will come to bear.

Preferably the abovementioned reinforcing element is associated with the mechanical support portion through co-pressing at the hot-pressing step.

In accordance with a second general embodiment for the invention, illustrated in particular in Figure 2, only friction portion 10 of brake pad 1 is made of the abovementioned ceramic matrix friction material, while the mechanical support portion 20 consists of a support plate 21 provided with one or more lightening apertures 25 or 26 and associated with the friction portion 10.

Preferably the lightening apertures 25 are obtained in the portion of the support plate 21 which will be coupled with friction portion 10.

Preferably the support plate 21 is metal, for example steel. In this case, with regard to the first general embodiment for the invention described above, there is a less pronounced reduction in weight, yet still considerable in comparison with state of the art technique inasmuch as it is linked only to a reduction in the quantity of material forming the plate.

Advantageously, due to the fact that the ceramic matrix material can be made with a pyrolysis process also at temperatures between 400°C and 600°C, it is possible to use support plates (21) in non-metallic material, such as for example composites based on low heat conducting oxides which have a specific weight that is less than steel and maintain form and structure without undergoing considerable deformation when subjected to the thermal stresses of the pressing and pyrolysis process.

In this case weight reduction can be more pronounced since it is due not only to a reduction in the quantity of plate material but also the use of materials with a specific weight that is less than the traditionally used steel.

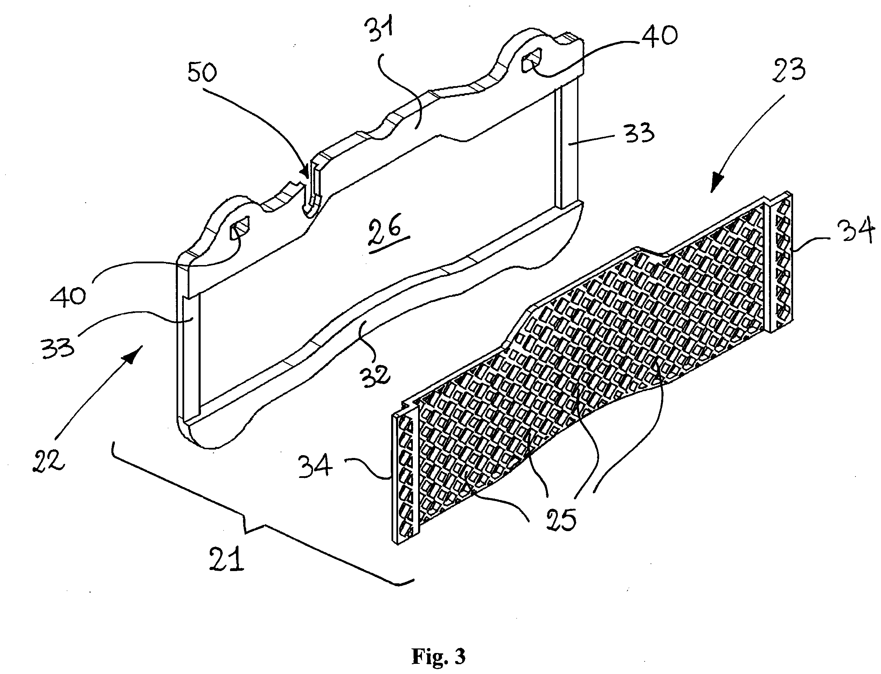

In accordance with a preferred embodiment, illustrated in particular in Figures 3 to 9, the support plate 20 comprises a perimetric frame 22, which delimits an internal empty space 26, and a plate-like element 23 which is suitable for closing the abovementioned empty space 26 by coupling with frame 22 and in correspondence to which there are lightening apertures 25.

In greater detail, as may be seen in particular in Figure 3, perimetric frame 22 comprises - along the preferential development direction of the brake pad - a first and a second profiled portion 31 and 32, opposite each other. Frame 22 is completed by two connection portions 33 which join the profiled portions 31 and 32 at the extremities.

Advantageously, in correspondence to the first portion 31, seats 40 can be made for the brake pad guide pins, as well as a seat 50 for the wear indicator of friction portion 10.

Preferably the two connecting portions 33 are thinner than profiled portions 31 and 32 in such a way as to define, with regard to profiled portions 31 and 32, a lowered zone to function as seat for the abovementioned plate-like element 23.

Preferably the lightening apertures 25, made in plate-like element 23 to reduce the weight of support plate 21, are distributed homogeneously over the whole surface of said plate-like element.

In greater detail, plate-like element 23 may consist of sheet metal with punched lightening apertures 25, or alternatively of a metal mesh.

The frame 22 and the plate-like element 23 can be joined by welding, gluing, by mechanical means of fixing or simply by interlocking.

Preferably, as may be seen from Figures 5, 7 and 9, the plate-like element 23 is associated with frame 22 in such a way as to define with the latter a continuous surface in correspondence to the face of brake pad 1 which will operate directly with the braking system, which is to say the face opposite the tribologically active one.

To this end, as may be seen in Figure 3, the plate-like element 23 has two side support wings 34, staggered with regard to the main plane position and intended to abut in the lowered zone defined by connection portions 33 of frame 22.

Advantageously, support plate 20 can be provided with stiffening elements 24 in correspondence to the points on which the actuating means of the braking system will bear.

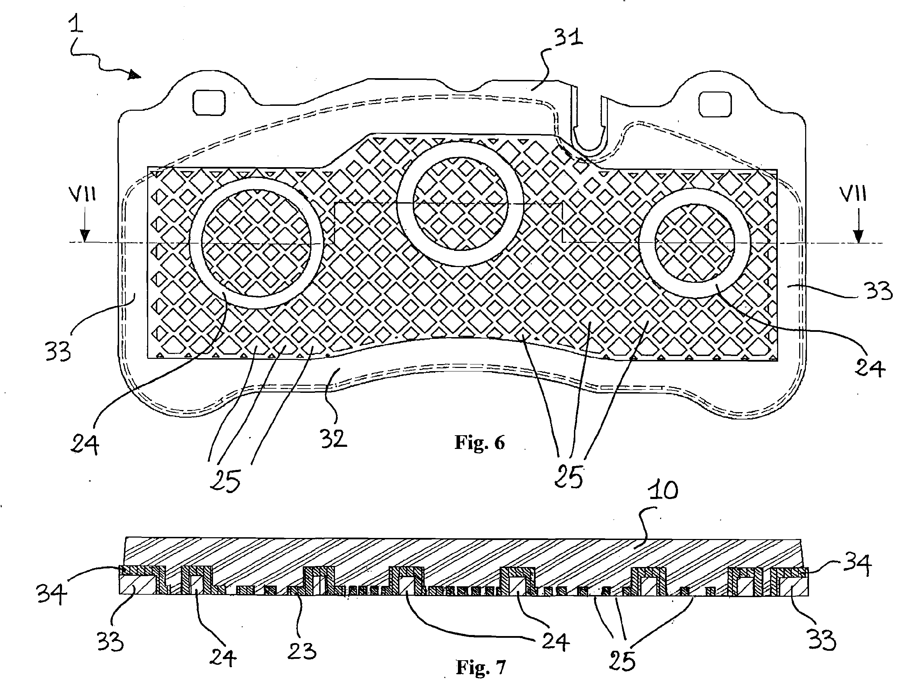

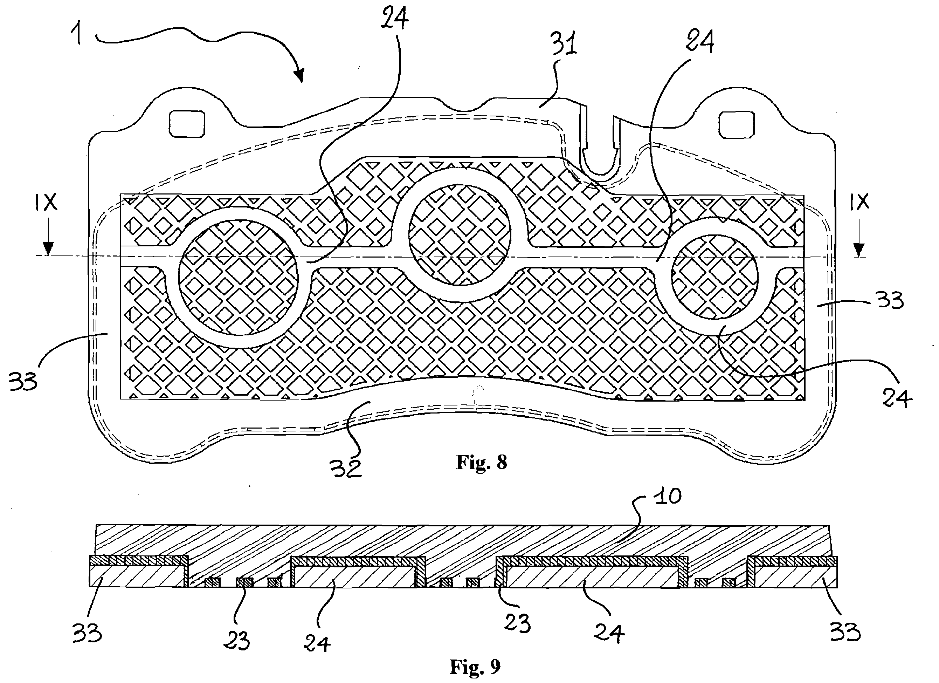

In greater detail, as may be seen in Figures 6 and 8, the stiffening elements 24 may be annular elements connected to the plate-like element 23, in correspondence to which there are no lightening apertures.

Stiffening elements 24 may be separate, as envisaged in the embodiment illustrated in Figures 6 and 7, or be interconnected to form a continuous structure as envisaged in the embodiment illustrated in Figures 8 and 9.

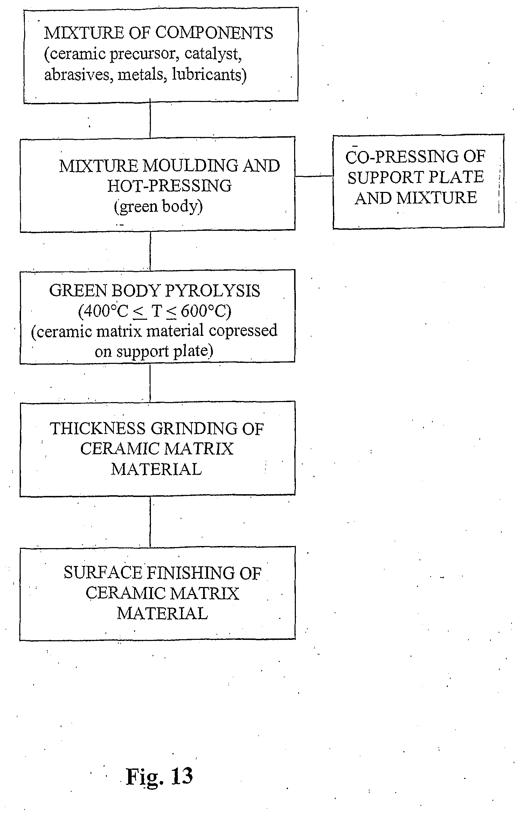

Preferably the support plate 21 is co-pressed with the mixture during the hot-pressing step, as illustrated in the diagram in Figure 13. In this way the mixture - still fluid - penetrates the lightening apertures and takes on the form of the support plate, creating close contact.

As may be seen in particular in Figures 4, 6 and 8, the friction portion 20 is made in such a way that it covers the zones of the plate bearing the lightening apertures 25.

Depending on the form of the brake pad it is nonetheless possible to envisage the friction portion in ceramic matrix material extending to cover, at least partially, zones in which (for structural reasons) no lightening apertures are envisaged, as in the embodiments illustrated in Figures 4, 6 and 8 where the profile of friction portion 20 is shown by a dotted line.

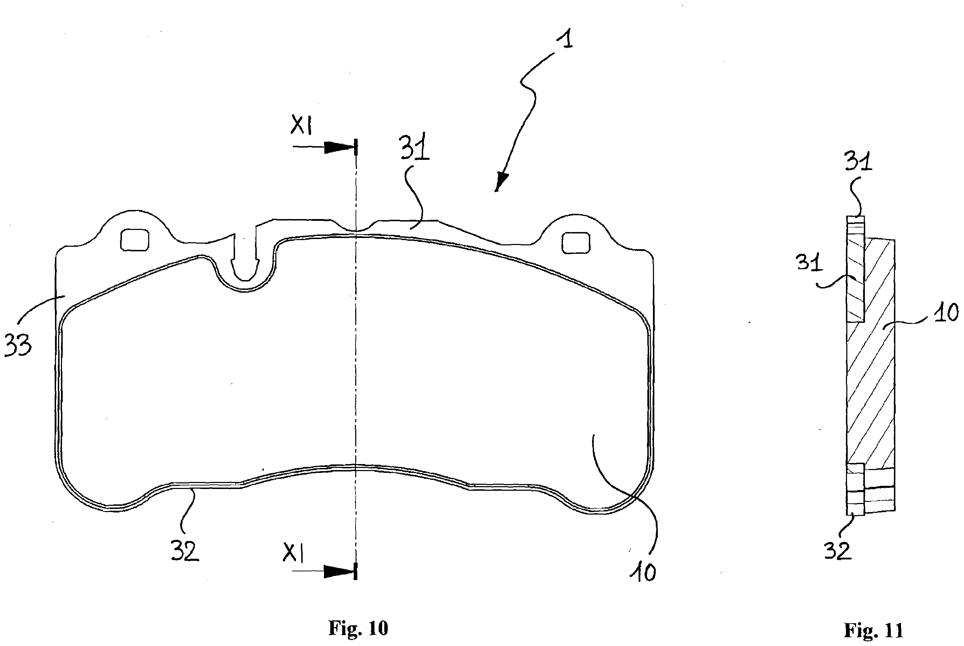

In accordance with a third alternative embodiment, illustrated in particular in Figures 10 and 11, the support plate 20 consists only of the perimetric frame 22 described above. Empty space 26 delimited by frame 22 is a single lightening aperture which is filled by the ceramic matrix material (as may be seen in particular in Figure 11).

Preferably the lightening apertures 25 have a surface area of at least 5 mm², and even more preferably 10 mm². Where only one lightening aperture 26 is envisaged (reinforcement plate consisting of the perimetric frame alone) the area of the aperture is comparable to the extent of the friction portion in ceramic matrix material.

In Figures 1c, 3, 4, 6 and 8 the lightening apertures 25 have a square or rhomboid form. However apertures 25 may have different forms, for example rectangular, circular, elliptical or even irregular.

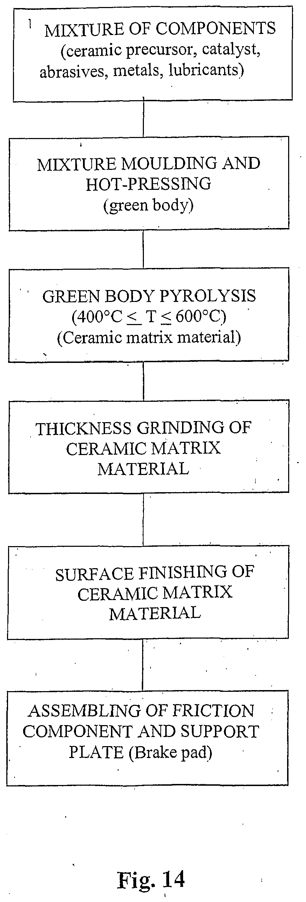

In accordance with a particular embodiment, the friction portion 10 in ceramic matrix material may be made as an element in itself and connected in a specific assembling step to support plate 21 by gluing or fixing means as illustrated in the diagram in Figure 14.

Advantageously, intermediate embodiments may be envisaged, between the first and second general embodiments described above, in which the mechanical support portion is made with a support plate and a layer of ceramic matrix material, bonded to form a single body.

There follows a detailed description of the method for creating the ceramic matrix material for brake pad 1 in accordance with the invention.

As mentioned above, in its most general form of application the method of the invention comprises at least one first step of mixing the basic components, a second step of hot-pressing the mixture and a third step of pyrolysis of the preformed body (or moulded body).

The step of mixing the basic components of the ceramic matrix material should preferably be done in a horizontal blade mixer. However other types of mixers may be envisaged, depending on the characteristics and quantities of the components to be mixed.

In accordance with a preferable applicative embodiment for the invention method, the step of mixing the various components takes place in two stages.

In the first stage the polymeric ceramic precursor is mixed with the appropriate catalyst (for reticulation reactions) in the absence of the other components. In this way a more homogeneous mixture is obtained in terms of catalyst distribution and therefore (on completion of the pressing step) a reticulation of the precursor spread throughout the mass of the material.

Advantageously, this first mixing stage is carried out for sufficient time to ensure suitable mixing, preferably between 1 and 3 minutes.

In the second mixing stage all the other components are added to the precursor-catalyst mixture: abrasives, lubricants and metal materials.

Advantageously, this second mixing stage is carried out for sufficient time to ensure suitable mixing, preferably between 3 and 5 minutes.

The hot-pressing step is preferably carried out with a vertical press operating in compression on a steel mould.

Preferably, in cases where it is intended to directly bond the friction component to a metal support (e.g. disc brake pad support plate) during the production steps of the ceramic matrix material, the mould should be a plate (or matrix) with a through aperture and a perimetric section corresponding to the form to be given to the body in ceramic matrix material (e.g. the friction portion of the brake pad). The plate-matrix may be provided with one, two or more apertures.

The operation begins by blocking one end of the through aperture (preferably the lower one, with reference to a horizontal orientation of the plate-matrix in the press) using the head of the punch with which the press is provided. The aperture (which defines a loading chamber) is then filled with the mixture. The upper end is then closed with a metal plate of shape and thickness appropriately selected in function of the brake pad applications. With the plate suitably locked in position pressing is begun by actuating the punch. The temperature inside the mould is measured with thermocouples inserted in the mould itself.

Presses and moulds other than the one described above may be envisaged.

Jointly with or separately from what is described above, during the hot-pressing step the pressures exerted on the material in the mould should preferably be between 250 and 500 Kg/cm².

It was surprisingly discovered that application of pressures within the range specified above has beneficial effects on the performances of the final ceramic matrix material in terms of wear resistance, friction and running-in (understood as the time taken to achieve optimal functioning conditions).

An improvement in performance linked to application of pressures as specified above during pressing was noted independently of the pyrolysis process operational conditions.

An ameliorating synergic effect was also noted on final ceramic matrix material performance through combining the pyrolysis process at temperatures below 800°C (and in particular between 400°C and 600°C) and the application of pressing pressures between 250 and 500 Kg/cm².

Jointly with or separately from the application of pressures between 250 and 500 Kg/cm², the pressing step should preferably be carried out at temperatures between 120°C and 150°C to permit fluidification of the ceramic precursor and the achievement of viscosity values such as to facilitate close contact and bonding between the precursor and the other components of the mixture.

Jointly with or separately from what is described above, the pressing step should preferably be carried out with alternate cycles of application and release of force.

In accordance with a special applicative form of the method the pressing step envisages three consecutive cycles of application and release of force, each lasting about 30 seconds (15 seconds of application and 15 seconds of release). There follows a final step of continuous application of force for approximately 90 - 210 seconds. The overall pressing step requires a period of time that varies between 3 and 5 minutes. The pressing times and temperatures allow the well fluidified ceramic precursor to spread homogeneously to all portions of the mould and among the particles of the various mix components.

In accordance with an especially preferred implementation, the support plate is co-pressed with the mixture of precursor, catalyst and filler and then undergoes pyrolysis together with the preformed body.

Carrying out pyrolysis (in accordance with the invention) at temperatures below 800°C, and in particular between 400°C and 600°C, makes the operation expedient and feasible. In fact the metal support plate can bear the thermal stresses deriving from the pyrolysis process without undergoing unacceptable heat deformations.

Thanks to the invention method it is therefore possible to directly bond the support plate to the green body, hence to the ceramic matrix material, during the friction material production steps. On completion of the friction material creation steps we therefore have a friction material/plate assembly which facilitates the subsequent work processes of finishing and of any application of mechanical fixing means.

As already mentioned, a characterising aspect of the invention is that the pyrolysis process in carried out at temperatures below 800°C.

It was noted that the best results in terms of improving friction material performances are obtained by carrying out the pyrolysis process in such a way as to reach maximum temperatures between 400 and 600°C.

Advantageously, the pyrolysis process is carried out envisaging a time at maximum temperature between 3 and 5 hours, and preferably 4 hours.

During the pyrolysis process the velocity of heating the preformed body (green body) from surrounding to maximum temperature should preferably be between 4 and 6°C/min, preferably 5°C/min.

The pyrolysis process should preferably be carried out in an isothermal kiln.

Advantageously, with view to avoiding oxidative phenomena that would alter the ceramisation processes, pyrolysis is carried out in an inert atmosphere.

The inert atmosphere should preferably be created with a flow of argon or nitrogen, in cases where the formation of silicon oxycarbides is preferred (with general formula SiOₓC_{y}) in the ceramic matrix material.

Different atmospheres may also be envisaged, for example in ammonia flow, in cases where the formation of silicon oxynitrides is desired (with general formula SiOₓN_{y}) in the ceramic matrix material.

In accordance with a special applicative form of the invention illustrated in the diagram in Figure 1, the support plate is bonded to the already made friction material. On completion of the pyrolysis step there may be a step of thickness grinding of the preformed body in ceramic matrix material and, alternatively or additionally, a surface finishing step for the ceramic matrix body.

The essential purpose of these steps is to prepare the ceramic matrix material body in such a way that it can be subsequently coupled - in accordance with envisaged tolerances - with support elements (e.g. a metal support plate) in order to create a disc brake pad.

The method may also envisage, on completion of the above steps of grinding and/or surface refinishing steps, a step of assembly of the friction component with a metal support plate by means of suitable fixing elements such as bolts, rivets or glue.

Advantageously the surface finishing step should be carried out after the step of assembling the friction component and the support plate.

In accordance with an especially preferred applicative form of the invention (already mentioned above and illustrated in Figure 2) the elements supporting the friction component are bonded to the latter directly during the steps of creating the friction material.

On completion of the pyrolysis step there may be a step of thickness grinding of the preformed body in ceramic matrix material and, alternatively or additionally, an operational step of surface refinishing of the ceramic material body on the exposed and not covered parts of the plate.

The mixture to be pressed consists as follows (percentages expressed in weight with regard to the mixture): ceramic precursor and catalyst between 5 and 10%; abrasives between 20% and 30%; metal materials not greater than 60%; lubricants not greater than 50%.

As mentioned above, the ceramic polymeric precursor is of a siliconic type and may in particular be selected from the group comprising polysilanes, polycarbosilanes, polysilazanes and polysiloxanes with general formula [-R_{1....2},Si(C,N,B,O)_{0.5....1.5}-]ₙ.

Preferably the precursor should be selected from the polysiloxanes, independently of the substituting functional groups and of the degree of ramification of the polymer, with general formula [-RSiO_{1.5}-]ₙ, where R indicates hydrogen or an organic functional group (alkylic, acrylic etc).

Even more preferably, the precursor should be selected from the sesquisiloxanes and in particular the polymethyl-sesquisiloxanes.

Mixtures of two or more different organic precursors may be envisaged.

Advantageously, the ceramic precursor's weight percentage in the mixture is between 6% and 9%.

Preferably the catalyst should be selected from organic coordination compounds with metals selected from the group comprising zinc, copper, aluminium, iron, zirconium, vanadium, chromium, manganese, cobalt, nickel and titanium.

Advantageously, the catalyst is selected from the acetonates, the beta-diketonates and the carboxylates. An especially preferred catalyst is zinc or zirconium acetylacetonate.

Advantageously, the catalyst is present with a stoichiometric percentage with regard to the ceramic precursor, preferably a percentage between 0.15% and 0.3% of the mixture weight.

Preferably the ceramic precursor and catalyst used should be in powder form. But components in other forms, such as fluids, may also be used.

Preferably the abrasives consist of powdered silicon carbide. However other materials with hardness properties such as to function as abrasives may also be used, such as for example boron carbide, silicon, zircon, zirconium oxide (zirconia), periclase, corundum and spinel.

For simplicity in the description of abrasives below explicit reference will be made only to silicon carbide, but this should not be considered limitative. In fact the information concerning silicon carbide should be extended to other abrasives such as the ones listed above.

Advantageously, silicon carbide is in the form of powder in two different particle sizes.

The relationship between the average diameters of the two powders is between 9 and 11, and preferably 10.

Average diameter of a powder is intended as the value corresponding to d₅₀ of the particle size distribution curve. In the following description, reference will be made to the definitions of powders employed by the FEPA (European Federation of Abrasives Manufacturers).

The differentiated particle size of the silicon carbide powder means that a compatibly sized abrasive can be supplied to all the remaining components of the mixture. The finest powder blends with the fine lubricants and ceramic precursor (binder resin) while the large particle powder blends with the larger sized metal particles. This favours compaction of the material.

It is further noted that the finer powder blends and tends to homogenise with the remaining material while the larger particle powder remains "detached" from the other components of the mixture.

So it may be seen that the two different particle sizes result in abrasives that operate at different energy levels, to the advantage of final friction material performances. When the smaller particle size abrasives wear out there is a progressive "crumbling" of the larger particle size abrasives. This results in an averagely constant presence of smaller particle size abrasives.

Preferably the silicon carbide powders in the two different particle sizes should have average diameters between 1 µm and 600 µm.

In accordance with a general applicative form of the invention, the weight ratio between the silicon carbide powders of greater and lesser particle size is between 0.8 and 1.8.

As will be resumed below, should the ceramic matrix friction material be required to cooperate tribologically with a disc brake in composite ceramic material the weight ratio between larger and smaller particle size silicon carbide powder should be between 0.8 and 1.2, preferably 1.

Should the ceramic matrix friction material be required to cooperate tribologically with a disc brake in grey cast iron the weight ratio between larger and smaller particle size silicon carbide powder should be between 1.2 and 1.8, preferably 1.5.

In accordance with a preferable applicative form of the invention, the metal particles consist of particles in iron and/or iron alloy.

Advantageously, metal particles replacing or in addition to particles in iron and/or iron alloy consist of particles in copper and/or brass.

Preferably the particles in copper and brass, individually or mixed, are present in a percentage of less than 20% of mixture weight.

The term "particle" is intended to comprise parts of materials in the form of both powders and fibres.

As regards particles in ferrous materials, steel wool is especially preferred.

Preferably the metal particles (iron, iron alloys, copper and/or brass) in powder form should have an average diameter of less than 300 µm, whereas metal particles in fibre form (iron, iron alloys, copper and/or brass) should have an average diameter of less than 100 µm and a length of less than 1 mm.

In accordance with a preferable applicative form of the invention the lubricants consist of graphite in powder.

Advantageously, in replacement of or in addition to powdered graphite, the lubricants may consist of powdered coke, tin sulphide and/or tin.

Preferably the percentage of graphite should be between 9% and 13% of mixture weight while powdered coke, tin sulphide and tin (where envisaged) should have weights of less than 35%, 10% and 5% respectively with regard to the mixture.

Advantageously, as will be resumed in the attached examples, the use of powdered coke, tin sulphide and/or tin in combination with graphite powders reduces the graphite content, bringing it towards the lower extreme of the interval specified above.

Advantageously, graphite and/or coke powders have an average diameter between 200 µm and 800 µm while tin sulphide and/or tin powders have an average diameter of less than 100 µm.

As mentioned previously, the ceramic matrix friction material produced with the invention method may be used to manufacture brake pads that cooperate tribologically with disc brakes in composite ceramic material (CCM) or in grey cast iron, guaranteeing optimum performance in both cases in terms of value of friction coefficient stability and wear resistance.

Should the invention's ceramic matrix material be required to cooperate with discs in grey cast iron, the mixture undergoing the pressing step should have the following composition (percentages expressed in weight with regard to the mixture): ceramic precursor and catalyst between 5 and 10%; abrasives between 20% and 30%; metal materials between 25% and 60%; lubricants between 10% and 50%.

In greater detail, in accordance with a specific implementation, the weight ratio between the silicon carbide powder with greater particle size and the powder of lesser particle size should be between 1.2 and 1.8, and preferably 1.5.

The greater size particle powdered silicon carbide (SiC) is present in a percentage between 12% and 18% of mixture weight while the percentage of finer SiC powder is between 6% and 12% of mixture weight.

The metal particles consist of powdered iron, from 5% to 20% of mixture weight, steel wool from 5% to 30% of mixture weight and (where envisaged) copper and/or brass powder and/or fibres in percentages less than 20% of mixture weight.

Overall the particles (powder and fibres) of iron and/or iron alloys weigh between 5% and 60% of mixture weight.

Graphite, preferably in powder form, constitutes between 9% and 12% of mixture weight. Where coke is envisaged the percentage is less than 35% of mixture weight, whereas tin sulphide and tin (where envisaged), preferably in powder form, should be less than 10% and 5% of mixture weight respectively.

When graphite is the only lubricant the percentage should preferably be 12% of mixture weight. By way of example the addition of 3% weight of tin powder permits reducing the graphite to 10%.

There follow descriptions of five specific examples of making ceramic matrix materials, in accordance with the invention, intended to cooperate with discs in grey cast iron.

### Example 1

Mix 780 grams of polymethyl-sesquisiloxane resin (CH₃ - SiO_{3/2})ₙ in Wacker - Belsil ® PMS MK Powder (softening interval 50-60°C) and 20 grams of powdered zinc acetylacetonate in a horizontal blade mixer for approximately 2 minutes. Then add 1.500 grams of powdered SiC class FEPA F36 (average diameter 525 µm) and 1.000 grams of powdered SiC class FEPA F220 (average diameter 58 µm). Continue by adding 1.800 grams of copper in powder, 2.700 grams of steel wool, 1.000 grams of iron in powder and lastly 1.200 grams of graphite in powder. The second step of mixing is protracted for approximately 4 minutes.

The mixture's overall composition is as follows (percentages expressed in weight with regard to the mixture): 15% of powdered SiC F36; 10% powdered SiC F220; 18% copper in powder; 27% steel wool; 10% iron in powder; 12% graphite in powder; 7.8% polymethyl-sesquisiloxane resin; 0.2% zinc acetylacetonate.

The copper and iron powders have an average diameter of approximately 200 µm and approximately 250 µm respectively. The steel wool has an average diameter of approximately 80 µm and an average length of approximately 0.8 mm. The graphite powder has an average diameter of approximately 600 µm.

A portion of the mixture thus obtained then undergoes a hot-pressing step in a vertical press in order to obtain a preformed body (green body), as well as the high reticulation of the sesquisiloxanic resin.

The mixture is co-pressed with a lightened steel plate of the type illustrated in Figure 3, consisting of a perimetric frame and a plate-like element with square lightening apertures of which around 50% have a surface area of about 5 mm² and the rest about 10 mm². The frame is about 5 mm thick while the plate-like element is around 1 mm thick.

In greater detail, a plate (or matrix) is used, with a through-going aperture of substantially rectangular perimetric section corresponding to the form to be taken by the body in ceramic matrix material. The aperture has a surface area of around 77 cm² and a depth of about 8 cm.

The operation begins by blocking the lower end of the through aperture, using the head of the punch with which the press is provided. The aperture is then filled with the mixture and the upper end closed with the lightened steel plate described above. The quantity of mixture is defined in function of the final thickness of the brake pad, taking into account that following pressing there is a volume reduction of about 2/3. After positioning the plate appropriately, pressing is carried out by activating the punch.

The temperature inside the mould (measured by means of thermocouples) is maintained around 120°C. The maximum pressure applied during pressing is around 400 Kg/cm². Three consecutive cycles of application and release of force are envisaged, each lasting about 30 seconds (15 seconds of application and 15 seconds of release). There follows a final step of continuous application of force (without release) for approximately 150 seconds. The overall pressing step requires a period of approximately 4 minutes.

There follows a step of pyrolysis in an isothermal kiln with nitrogen flow of approximately 0.2 m³/h. The preformed body is heated from ambient temperature (25°C) to approximately 500°C at a velocity of approximately 5°C/min and kept at 500°C for approximately 4 hours.

The friction portion in ceramic matrix material lastly undergoes a finishing work process aimed at reducing thickness in function of the brake pad's final use.

The brake pad thus obtained has a thickness of 19.75 mm (including the thickness of the steel plate which is about 5 mm) and a total weight of around 540 grams, of which 350 grams is the weight of the friction portion in ceramic matrix material and the remaining 190 grams of the lightened plate and the part of the friction material that has filled the lightening apertures.

A traditional brake pad of the same form and functionality weighs around 635 grams. The brake pad in accordance with the invention therefore offers a weight reduction of around 15%.

### Example 2

Mix 780 grams of polymethyl-sesquisiloxane resin (CH₃ - SiO_{3/2})ₙ in Wacker - Belsil ® PMS MK Powder (softening interval 50-60°C) and 20 grams of powdered zinc acetylacetonate in a horizontal blade mixer for approximately 2 minutes. Then add 1.500 grams of powdered SiC class FEPA F100 (average diameter 129 µm) and 1.000 grams of powdered SiC class FEPA F500 (average diameter d₅₀ 12.8 µm). Continue by adding 1.800 grams of brass in powder, 2.700 grams of steel wool, 900 grams of iron in powder, 1.000 grams of graphite in powder and lastly 300 grams of tin in powder. The second step of mixing is protracted for approximately 4 minutes.

The mixture's overall composition is as follows (percentages expressed in weight with regard to the mixture): 15% of powdered SiC F100; 10% powdered SiC F500; 18% brass in powder; 27% steel wool; 9% iron in powder; 10% graphite in powder; 3% tin in powder; 7.8% polymethyl-sesquisiloxane resin; 0.2% zinc acetylacetonate.

The brass and iron powders have an average diameter of approximately 250 µm and approximately 200 µm respectively. The steel wool has an average diameter of approximately 80 µm and an average length of approximately 0.6 mm. The graphite and tin powders have an average diameter of approximately 400 µm and approximately 80 µm respectively.

A portion of the mixture thus obtained then undergoes a hot-pressing step in a vertical press in order to obtain a preformed body (green body), as well as the high reticulation of the sesquisiloxane resin.

The mixture is co-pressed with a lightened steel plate of the type illustrated in Figure 6, consisting of a perimetric frame and a plate-like element with square lightening apertures reinforced with 3 circular elements set in correspondence to the abutting zones of the braking system actuating means. Around 50% of the apertures have a surface area of about 5 mm² and the rest about 10 mm². The frame is about 5 mm thick while the plate-like element is around 1 mm thick.

In greater detail, a plate (or matrix) is used, with a through-going aperture of substantially rectangular perimetric section corresponding to the form to be taken by the body in ceramic matrix material. The aperture has a surface area of around 77 cm² and a depth of about 8 cm.

The operation begins by blocking the lower end of the through aperture, using the head of the punch with which the press is provided. The aperture is then filled with the mixture and the upper end closed with the lightened steel plate described above. The quantity of mixture is defined in function of the final thickness of the brake pad, taking into account that following pressing there is a volume reduction of about 2/3. After positioning the plate appropriately, pressing is carried out by activating the punch.

The temperature inside the mould is maintained around 130°C. The maximum pressure applied during pressing is around 450 Kg/cm². Three consecutive cycles of application and release of force are envisaged, each lasting about 30 seconds (15 seconds of application and 15 seconds of release). There follows a final step of continuous application of force (without release) for approximately 210 seconds. The overall pressing step requires a period of approximately 5 minutes.

There follows a step of pyrolysis in an isothermal kiln with nitrogen flow of approximately 0.2 m³/h. The preformed body is heated from ambient temperature (25°C) to approximately 400°C at a velocity of approximately 6°C/min and kept at 400°C for approximately 4 hours and 30 minutes.

The friction portion in ceramic matrix material lastly undergoes a finishing work process aimed at reducing thickness in function of the brake pad's end use.

The brake pad thus obtained has a thickness of 19.75 mm (including the thickness of the steel plate which is about 5 mm) and a total weight of around 560 grams, of which 350 grams is the weight of the friction portion in ceramic matrix material and the remaining 210 grams of the lightened plate and the part of the friction material that has filled the lightening apertures.

A traditional brake pad of the same form and functionality weighs around 635 grams. The brake pad in accordance with the invention therefore offers a weight reduction of around 12%.

### Example 3

Mix 780 grams of cyclopentasiloxane resin Wacker - Belsil ® RG100 and 20 grams of powdered zinc acetylacetonate in a horizontal blade mixer for approximately 2 minutes. Then add 1.300 grams of powdered SiC class FEPA F46 (average diameter 370 µm) and 800 grams of powdered SiC class FEPA F280 (average diameter d₅₀ 36.5 µm). Continue by adding 2.500 grams of steel wool, 300 grams of iron in powder, 1.000 grams of graphite in powder, 3.000 grams of coke in powder and lastly 300 grams of tin in powder. The second step of mixing is protracted for approximately 4 minutes.

The mixture's overall composition is as follows (percentages expressed in weight with regard to the mixture): 13% powdered SiC F46; 8% powdered SiC F280; 25% steel wool; 3% iron in powder; 10% graphite in powder; 30% coke in powder; 3% tin in powder; 7.8% siliconic resin; 0.2% zinc acetylacetonate.

The iron powder has an average diameter of approximately 150 µm. The steel wool has an average diameter of approximately 60 µm and an average length of approximately 0.5 mm. The graphite, coke and tin powders have an average diameter of approximately 700 µm, approximately 600 µm and approximately 90 µm respectively.

A portion of the mixture thus obtained then undergoes a hot-pressing step in a vertical press in order to obtain a preformed body (green body), as well as the high reticulation of the siloxanic resin.

The mixture is co-pressed with a mesh reinforcement body about 1 mm thick, similar to the plate-like body with lightening apertures illustrated in Figure 3. Around 50% of the apertures have a surface area of about 5 mm² and the rest about 10 mm².

In greater detail, a plate (or matrix) is used, with a double section through-going aperture: the first has a substantially rectangular perimetric section corresponding to the form to be taken by the friction portion while the second has a substantially rectangular perimetric section corresponding to the form to be taken by the support portion. The aperture has a depth of about 8 cm and, in correspondence to the first section, a surface area of around 77 cm².

The operation begins by blocking the lower end of the through aperture, using the head of the punch with which the press is provided. The aperture is then filled with the mixture and the upper end closed with the mesh reinforcement body described above. The quantity of mixture is defined in function of the final thickness of the brake pad, taking into account that following pressing there is a volume reduction of about 2/3. After positioning the plate appropriately, pressing is carried out by activating the punch.

The temperature inside the mould is maintained around 150°C. The maximum pressure applied during pressing is around 350 Kg/cm². Three consecutive cycles of application and release of force are envisaged, each lasting about 30 seconds (15 seconds of application and 15 seconds of release). There follows a final step of continuous application of force (without release) for approximately 210 seconds. The overall pressing step requires a period of approximately 5 minutes.

There follows a step of pyrolysis in an isothermal kiln with nitrogen flow of approximately 0.2 m³/h. The preformed body is heated from ambient temperature (25°C) to approximately 600°C at a velocity of approximately 4°C/min and kept at 600°C for approximately 3 hours and 30 minutes.

The friction portion in ceramic matrix material lastly undergoes a finishing work process aimed at reducing thickness in function of the brake pad's end use.

The brake pad thus obtained has a thickness of 19.75 mm (including the thickness of the reinforcement which is about 1 mm) and a total weight of around 490 grams, of which 350 grams is the weight of the friction portion in ceramic matrix material and the remaining 140 grams of the reinforcement element and the part of the friction material that has filled the lightening apertures.

A traditional brake pad of the same form and functionality weighs around 635 grams. The brake pad in accordance with the invention therefore offers a weight reduction of around 23%.

### Example 4

Mix 780 grams of cyclopentasiloxane resin Wacker - Belsil ® RG100 and 20 grams of powdered zinc acetylacetonate in a horizontal blade mixer for approximately 2 minutes. Then add 1.300 grams of powdered SiC class FEPA F46 (average diameter 370 µm) and 800 grams of powdered SiC class FEPA F280 (average diameter d₅₀ 36.5 µm). Continue by adding 2.500 grams of steel wool, 300 grams of iron in powder, 1.000 grams of graphite in powder, 3.000 grams of coke in powder and lastly 300 grams of tin in powder. The second step of mixing is protracted for approximately 4 minutes.

The mixture's overall composition is as follows (percentages expressed in weight with regard to the mixture): 13% powdered SiC F46; 8% powdered SiC F280; 25% steel wool; 3% iron in powder; 10% graphite in powder; 30% coke in powder; 3% tin in powder; 7.8% siliconic resin; 0.2% zinc acetylacetonate.

The iron powder has an average diameter of approximately 150 µm. The steel wool has an average diameter of approximately 60 µm and an average length of approximately 0.5 mm. The graphite, coke and tin powders have an average diameter of approximately 700 µm, approximately 600 µm and approximately 90 µm respectively.

A portion of the mixture thus obtained then undergoes a hot-pressing step in a vertical press in order to obtain a preformed body (green body), as well as the high reticulation of the siloxanic resin.

The mixture is pressed without inserting any reinforcing element or support plate.

In greater detail, a plate (or matrix) is used, with a double section through-going aperture: the first has a substantially rectangular perimetric section corresponding to the form to be taken by the friction portion while the second has a substantially rectangular perimetric section corresponding to the form to be taken by the support portion. The aperture has a depth of about 8 cm and, in correspondence to the first section a surface area of around 77 cm².

The operation begins by blocking the lower end of the through aperture, using the head of the punch with which the press is provided. The aperture is then filled with the mixture and the upper end closed with the special closure element on the pressing device. The quantity of mixture is defined in function of the final thickness of the brake pad, taking into account that following pressing there is a volume reduction of about 2/3.

The temperature inside the mould is maintained around 150°C. The maximum pressure applied during pressing is around 350 Kg/cm². Three consecutive cycles of application and release of force are envisaged, each lasting about 30 seconds (15 seconds of application and 15 seconds of release). There follows a final step of continuous application of force (without release) for approximately 210 seconds. The overall pressing step requires a period of approximately 5 minutes.

There follows a step of pyrolysis in an isothermal kiln with nitrogen flow of approximately 0.2 m³/h. The preformed body is heated from ambient temperature (25°C) to approximately 600°C at a velocity of approximately 4°C/min and kept at 600°C for approximately 3 hours and 30 minutes.

The brake pad made entirely in ceramic matrix material lastly undergoes a finishing work process aimed at reducing thickness in function of the brake pad's end use.

The brake pad thus obtained has a thickness of 19.75 mm (including the thickness of the reinforcement which is about 1 mm) and a total weight of around 470 grams, of which 350 grams is the weight of the friction portion in ceramic matrix material and the remaining 120 grams of the support portion.

A traditional brake pad of the same form and functionality weighs around 635 grams. The brake pad in accordance with the invention therefore offers a weight reduction of around 26%.

### Example 5

Mix 780 grams of polymethyl-sesquisiloxane resin (CH₃ - SiO_{3/2})ₙ in Wacker - Belsil ® PMS MK Powder (softening interval 50-60°C) and 20 grams of powdered zinc acetylacetonate in a horizontal blade mixer for approximately 2 minutes. Then add 1.500 grams of powdered SiC class FEPA F36 (average diameter 525 µm) and 1.000 grams of powdered SiC class FEPA F220 (average diameter 58 µm). Continue by adding 1.800 grams of copper in powder, 2.700 grams of steel wool, 1.000 grams of iron in powder and lastly 1.200 grams of graphite in powder. The second step of mixing is protracted for approximately 4 minutes.

The mixture's overall composition is as follows (percentages expressed in weight with regard to the mixture): 15% of powdered SiC F36; 10% powdered SiC F220; 18% copper in powder; 27% steel wool; 10% iron in powder; 12% graphite in powder; 7.8% polymethyl-sesquisiloxane resin; 0.2% zinc acetylacetonate.

The copper and iron powders have an average diameter of approximately 200 µm and approximately 250 µm respectively. The steel wool has an average diameter of approximately 80 µm and an average length of approximately 0.8 mm. The graphite powder has an average diameter of approximately 600 µm.

A portion of the mixture thus obtained then undergoes a hot-pressing step in a vertical press in order to obtain a preformed body (green body), as well as the high reticulation of the sesquisiloxanic resin.

The mixture is co-pressed with a lightened steel plate consisting of a perimetric frame of the type illustrated in Figure 3. The frame is around 5 mm thick and delimits a single central lightening aperture.

In greater detail, a plate (or matrix) is used, with a through-going aperture of substantially rectangular perimetric section corresponding to the form to be taken by the body in ceramic matrix material. The aperture has a surface area of around 77 cm² and a depth of about 8 cm.

The operation begins by blocking the lower end of the through aperture, using the head of the punch with which the press is provided. The aperture is then filled with the mixture and the upper end closed with the lightened steel plate described above and with a further closure element with which the pressing system is provided. The quantity of mixture is defined in function of the final thickness of the brake pad, taking into account that following pressing there is a volume reduction of about 2/3. After positioning the plate appropriately, pressing is carried out by activating the punch.

The temperature inside the mould (measured by means of thermocouples) is maintained around 120°C. The maximum pressure applied during pressing is around 400 Kg/cm². Three consecutive cycles of application and release of force are envisaged, each lasting about 30 seconds (15 seconds of application and 15 seconds of release). There follows a final step of continuous application of force (without release) for approximately 150 seconds. The overall pressing step requires a period of approximately 4 minutes.

There follows a step of pyrolysis in an isothermal kiln with nitrogen flow of approximately 0.2 m³/h. The preformed body is heated from ambient temperature (25°C) to approximately 500°C at a velocity of approximately 5°C/min and kept at 500°C for approximately 4 hours.

The friction portion in ceramic matrix material lastly undergoes a finishing work process aimed at reducing thickness in function of the brake pad's end use.

The brake pad thus obtained has a thickness of 19.75 mm (including the thickness of the frame which is about 5 mm) and a total weight of around 520 grams, of which 350 grams is the weight of the friction portion in ceramic matrix material and the remaining 170 grams of the frame and the part of friction material filling the single central lightening aperture.

A traditional brake pad of the same form and functionality weighs around 635 grams. The brake pad in accordance with the invention therefore offers a weight reduction of around 18%.

Should the ceramic matrix material according to the invention be required to function with discs in CCM, the mixture for the pressing step has the following composition (percentages expressed in weight with regard to the mixture): ceramic precursor and catalyst between 5 and 10%; abrasives between 20% and 30%; metal materials between 30% and 60%; lubricants between 10% and 40%.

In greater detail, in accordance with a specific implementation, the weight ratio between the silicon carbide powder with greater particle size and the powder of lesser particle size should be between 0.8 and 1.2, and preferably 1.

The greater size particle powdered silicon carbide (SiC) is present in a percentage between 10% and 15% of mixture weight.

The metal particles consist of steel wool from 20% to 30% of mixture weight (which may be wholly or partly replaced by powdered iron) and (where envisaged) copper and/or brass powder and/or fibres in percentages less than 20% of mixture weight.

Unlike the ceramic matrix material for cooperation with discs in grey cast iron, the material for discs in CCM also comprises silicon among the particles, preferably in powder form.

Advantageously, silicon powder is present with a weight percentage between 9 and 11% of the mixture, preferably 10%.

The silicon powder preferably has an average diameter of less than 50 µm.

Graphite, preferably in powder form, constitutes between 11% and 13% of mixture weight, preferably 12%. Where coke is envisaged the percentage is less than 20% of mixture weight, whereas tin sulphide and tin (where envisaged), preferably in powder form, should be less than 10% and 5% of mixture weight respectively.

There follow descriptions of five specific examples of making ceramic matrix materials, in accordance with the invention, intended to cooperate with discs in composite ceramic material (CCM).

### Example 6

Mix 780 grams of polymethyl-sesquisiloxane resin (CH₃ - SiO_{3/2})ₙ in Wacker - Belsil ® PMS MK Powder (softening interval 50-60°C) and 20 grams of powdered zinc acetylacetonate in a horizontal blade mixer for approximately 2 minutes. Then add 1.200 grams of powdered SiC class FEPA F46 (average diameter 370 µm) and 1.300 grams of powdered SiC class FEPA F280 (average diameter 36.5 µm). Continue by adding 1.800 grams of copper in powder, 2.700 grams of steel wool, 1.000 grams of silicon in powder and lastly 1.200 grams of graphite in powder. The second step of mixing is protracted for approximately 4 minutes.

The mixture's overall composition is as follows (percentages expressed in weight with regard to the mixture): 12% of powdered SiC F46; 13% powdered SiC F280; 18% copper in powder; 27% steel wool; 10% silicon in powder; 12% graphite in powder; 7.8% sesquisiloxane resin; 0.2% zinc acetylacetonate.

The copper and silicon powders have an average diameter of approximately 150 µm and approximately 40 µm respectively. The steel wool has an average diameter of approximately 50 µm and an average length of approximately 0.4 mm. The graphite powder has an average diameter of approximately 300 µm.

A portion of the mixture thus obtained then undergoes a hot-pressing step in a vertical press in order to obtain a preformed body (green body), as well as the high reticulation of the sesquisiloxanic resin.

The mixture is co-pressed with a lightened steel plate of the type illustrated in Figure 3, consisting of a perimetric frame and a plate-like element with square lightening apertures of which around 50% have a surface area of about 5 mm² and the rest about 10 mm². The frame is about 5.5 mm thick while the plate-like element is around 1 mm thick.

In greater detail, a plate (or matrix) is used, with a through-going aperture of substantially rectangular perimetric section corresponding to the form to be taken by the body in ceramic matrix material. The aperture has a surface area of around 145 cm² and a depth of about 8 cm.

The operation begins by blocking the lower end of the through aperture, using the head of the punch with which the press is provided. The aperture is then filled with the mixture and the upper end closed with the lightened steel plate described above. The quantity of mixture is defined in function of the final thickness of the brake pad, taking into account that following pressing there is a volume reduction of about 2/3. After positioning the plate appropriately, pressing is carried out by activating the punch.

The temperature inside the mould is maintained around 120°C. The maximum pressure applied during pressing is around 300 Kg/cm². Three consecutive cycles of application and release of force are envisaged, each lasting about 30 seconds (15 seconds of application and 15 seconds of release). There follows a final step of continuous application of force (without release) for approximately 90 seconds. The overall pressing step requires a period of approximately 3 minutes.

There follows a step of pyrolysis in an isothermal kiln with nitrogen flow of approximately 0.2 m³/h. The preformed body is heated from ambient temperature (25°C) to approximately 500°C at a velocity of approximately 5°C/min and kept at 500°C for approximately 4 hours.

The friction portion in ceramic matrix material lastly undergoes a finishing work process aimed at reducing thickness in function of the brake pad's end use.

The brake pad thus obtained has a thickness of 16.4 mm (including the thickness of the steel plate which is about 5.5 mm) and a total weight of around 860 grams, of which 480 grams is the weight of the friction portion in ceramic matrix material and the remaining 380 grams of the lightened plate and the part of the friction material that has filled the lightening apertures.

A traditional brake pad of the same form and functionality weighs around 1.180 grams. The brake pad in accordance with the invention therefore offers a weight reduction of around 27%.

### Example 7

Mix 780 grams of polymethyl-sesquisiloxane resin (CH₃ - SiO_{3/2})ₙ in Wacker - Belsil ® PMS MK Powder (softening interval 50-60°C) and 20 grams of powdered zinc acetylacetonate in a horizontal blade mixer for approximately 2 minutes. Then add 1.200 grams of powdered SiC class FEPA F54 (average diameter 310 µm) and 1.300 grams of powdered SiC class FEPA F320 (average diameter d₅₀ 29.2 µm). Continue by adding 1.000 grams of silicon in powder, 2.700 grams of steel wool, 1.200 grams of graphite in powder and lastly 1.800 grams of coke in powder. The second step of mixing is protracted for approximately 4 minutes.

The mixture's overall composition is as follows (percentages expressed in weight with regard to the mixture): 12% powdered SiC F54; 13% powdered SiC F320; 27% steel wool; 10% silicon in powder; 12% graphite in powder; 18% coke in powder; 7.8% sesquisiloxane resin; 0.2% zinc acetylacetonate.

The silicon powder has an average diameter of approximately 35 µm. The steel wool has an average diameter of approximately 70 µm and an average length of approximately 0.6 mm. The graphite and coke powders have an average diameter of approximately 500 µm.

A portion of the mixture thus obtained then undergoes a hot-pressing step in a vertical press in order to obtain a preformed body (green body), as well as the high reticulation of the sesquisiloxanic resin.

The mixture is co-pressed with a lightened steel plate of the type illustrated in Figure 6, consisting of a perimetric frame and a plate-like element with square lightening apertures reinforced with 3 circular elements set in correspondence to the abutting zones of the braking system actuating means. Around 50% of the apertures have a surface area of about 5 mm² and the rest about 10 mm². The frame is about 5.5 mm thick while the plate-like element is around 1 mm thick.

In greater detail, a plate (or matrix) is used, with a through-going aperture of substantially rectangular perimetric section corresponding to the form to be taken by the body in ceramic matrix material. The aperture has a surface area of around 145 cm² and a depth of about 8 cm.

The operation begins by blocking the lower end of the through aperture, using the head of the punch with which the press is provided. The aperture is then filled with the mixture and the upper end closed with the lightened steel plate described above. The quantity of mixture is defined in function of the final thickness of the brake pad, taking into account that following pressing there is a volume reduction of about 2/3. After positioning the plate appropriately, pressing is carried out by activating the punch.

The temperature inside the mould is maintained around 130°C. The maximum pressure applied during pressing is approximately 250 Kg/cm². Three consecutive cycles of application and release of force are envisaged, each lasting about 30 seconds (15 seconds of application and 15 seconds of release). There follows a final step of continuous application of force (without release) for approximately 150 seconds. The overall pressing step requires a period of approximately 4 minutes.

There follows a step of pyrolysis in an isothermal kiln with nitrogen flow of approximately 0.2 m³/h. The preformed body is heated from ambient temperature (25°C) to approximately 550°C at a velocity of approximately 5°C/min and kept at 550°C for approximately 4 hours.

The friction portion in ceramic matrix material lastly undergoes a finishing work process aimed at reducing thickness in function of the brake pad's end use.

The brake pad thus obtained has a thickness of 16.4 mm (including the thickness of the steel plate which is about 5.5 mm) and a total weight of around 880 grams, of which 480 grams is the weight of the friction portion in ceramic matrix material and the remaining 400 grams of the lightened plate and the part of the friction material that has filled the lightening apertures.

A traditional brake pad of the same form and functionality weighs around 1.180 grams. The brake pad in accordance with the invention therefore offers a weight reduction of around 25%.

### Example 8

Mix 780 grams of cyclopentasiloxane resin Wacker - Belsil ® RG100 and 20 grams of powdered zinc acetylacetonate in a horizontal blade mixer for approximately 2 minutes. Then add 1.200 grams of powdered SiC class FEPA F40 (average diameter 438 µm) and 1.300 grams of powdered SiC class FEPA F240 (average diameter d₅₀ 44.5 µm). Continue by adding 1.500 grams of brass in powder, 2.100 grams of steel wool, 1.000 grams of silicon in powder, 1.200 grams of graphite in powder and lastly 900 grams of tin sulphide in powder. The second step of mixing is protracted for approximately 4 minutes.

The mixture's overall composition is as follows (percentages expressed in weight with regard to the mixture): 12% powdered SiC F40; 13% powdered SiC F240; 21% steel wool; 15% brass in powder; 10% silicon in powder; 12% graphite in powder; 9% tin sulphide in powder; 7.8% siliconic resin; 0.2% zinc acetylacetonate.

The brass and silicon powders have an average diameter of approximately 200 µm and approximately 45 µm respectively. The steel wool has an average diameter of approximately 80 µm and an average length of approximately 0.8 mm. The graphite and tin sulphide powders have an average diameter of approximately 750 µm and approximately 90 µm respectively.

A portion of the mixture thus obtained then undergoes a hot-pressing step in a vertical press in order to obtain a preformed body (green body), as well as the high reticulation of the sesquisiloxanic resin.

The mixture is co-pressed with a mesh reinforcement body about 1 mm thick, similar to the plate-like body with lightening apertures illustrated in Figure 3. Around 50% of the apertures have a surface area of about 5 mm² and the rest about 10 mm².

In greater detail, a plate (or matrix) is used, with a double section through-going aperture: the first has a substantially rectangular perimetric section corresponding to the form to be taken by the friction portion while the second has a substantially rectangular perimetric section corresponding to the form to be taken by the support portion. The aperture has a depth of about 8 cm and, in correspondence to the first section, a surface area of around 145 cm².

The operation begins by blocking the lower end of the through aperture, using the head of the punch with which the press is provided. The aperture is then filled with the mixture and the upper end closed with the mesh reinforcement body described above. The quantity of mixture is defined in function of the final thickness of the brake pad, taking into account that following pressing there is a volume reduction of about 2/3. After positioning the plate appropriately, pressing is carried out by activating the punch.

The temperature inside the mould is maintained around 130°C. The maximum pressure applied during pressing is around 450 Kg/cm². Three consecutive cycles of application and release of force are envisaged, each lasting about 30 seconds (15 seconds of application and 15 seconds of release). There follows a final step of continuous application of force (without release) for approximately 210 seconds. The overall pressing step requires a period of approximately 5 minutes.

There follows a step of pyrolysis in an isothermal kiln with nitrogen flow of approximately 0.2 m³/h. The preformed body is heated from ambient temperature (25°C) to approximately 450°C at a velocity of approximately 5°C/min and kept at 450°C for approximately 4 hours and 30 minutes.

The brake pad thus obtained has a thickness of 16.40 mm (including the thickness of the reinforcement which is about 1 mm) and a total weight of around 760 grams, of which 480 grams is the weight of the friction portion in ceramic matrix material and the remaining 280 grams of the reinforcement element and the part of the friction material that has filled the lightening apertures.

A traditional brake pad of the same form and functionality weighs around 1.180 grams. The brake pad in accordance with the invention therefore offers a weight reduction of around 35.6%.

### Example 9

Mix 780 grams of cyclopentasiloxane resin Wacker - Belsil ® RG100 and 20 grams of powdered zinc acetylacetonate in a horizontal blade mixer for approximately 2 minutes. Then add 1.200 grams of powdered SiC class FEPA F40 (average diameter 438 µm) and 1.300 grams of powdered SiC class FEPA F240 (average diameter d₅₀ 44.5 µm). Continue by adding 1.500 grams of brass in powder, 2.100 grams of steel wool, 1.000 grams of silicon in powder, 1.200 grams of graphite in powder and lastly 900 grams of tin sulphide in powder. The second step of mixing is protracted for approximately 4 minutes.

The mixture's overall composition is as follows (percentages expressed in weight with regard to the mixture): 12% powdered SiC F40; 13% powdered SiC F240; 21% steel wool; 15% brass in powder; 10% silicon in powder; 12% graphite in powder; 9% tin sulphide in powder; 7.8% siliconic resin; 0.2% zinc acetylacetonate.

The brass and silicon powders have an average diameter of approximately 200 µm and approximately 45 µm respectively. The steel wool has an average diameter of approximately 80 µm and an average length of approximately 0.8 mm. The graphite and tin sulphide powders have an average diameter of approximately 750 µm and approximately 90 µm respectively.

A portion of the mixture thus obtained then undergoes a hot-pressing step in a vertical press in order to obtain a preformed body (green body), as well as the high reticulation of the sesquisiloxanic resin.

In greater detail, a plate (or matrix) is used, with a double section through-going aperture: the first has a substantially rectangular perimetric section corresponding to the form to be taken by the friction portion while the second has a substantially rectangular perimetric section corresponding to the form to be taken by the support portion. The aperture has a depth of about 8 cm and, in correspondence to the first section, a surface area of around 145 cm².

The operation begins by blocking the lower end of the through aperture, using the head of the punch with which the press is provided. The quantity of mixture is defined in function of the final thickness of the brake pad, taking into account that following pressing there is a volume reduction of about 2/3. The aperture is then filled with the mixture and the upper end closed with the special closure element with which the pressing device is provided.

The temperature inside the mould is maintained around 130°C. The maximum pressure applied during pressing is around 450 Kg/cm². Three consecutive cycles of application and release of force are envisaged, each lasting about 30 seconds (15 seconds of application and 15 seconds of release). There follows a final step of continuous application of force (without release) for approximately 210 seconds. The overall pressing step requires a period of approximately 5 minutes.

There follows a step of pyrolysis in an isothermal kiln with nitrogen flow of approximately 0.2 m³/h. The preformed body is heated from ambient temperature (25°C) to approximately 450°C at a velocity of approximately 5°C/min and kept at 450°C for approximately 4 hours and 30 minutes.

The brake pad made entirely in ceramic matrix material lastly undergoes a finishing work process aimed at reducing thickness in function of the brake pad's end use.

The brake pad thus obtained has a thickness of 16.4 mm (including the thickness of the reinforcement which is about 1 mm) and a total weight of around 720 grams, of which 480 grams is the weight of the friction portion and the remaining 240 grams of the support portion.

A traditional brake pad of the same form and functionality weighs around 1.180 grams. The brake pad in accordance with the invention therefore offers a weight reduction of around 39%.

### Example 10

Mix 780 grams of polymethyl-sesquisiloxane resin (CH₃ - SiO_{3/2})ₙ in Wacker - Belsil ® PMS MK Powder (softening interval 50-60°C) and 20 grams of powdered zinc acetylacetonate in a horizontal blade mixer for approximately 2 minutes. Then add 1.200 grams of powdered SiC class FEPA F46 (average diameter 370 µm) and 1.300 grams of powdered SiC class FEPA F280 (average diameter 36.5 µm). Continue by adding 1.800 grams of copper in powder, 2.700 grams of steel wool, 1.000 grams of silicon in powder and lastly 1.200 grams of graphite in powder. The second step of mixing is protracted for approximately 4 minutes.

The mixture's overall composition is as follows (percentages expressed in weight with regard to the mixture): 12% of powdered SiC F46; 13% powdered SiC F280; 18% copper in powder; 27% steel wool; 10% silicon in powder; 12% graphite in powder; 7.8% sesquisiloxane resin; 0.2% zinc acetylacetonate.

The copper and silicon powders have an average diameter of approximately 150 µm and approximately 40 µm respectively. The steel wool has an average diameter of approximately 50 µm and an average length of approximately 0.4 mm. The graphite powder has an average diameter of approximately 300 µm.

A portion of the mixture thus obtained then undergoes a hot-pressing step in a vertical press in order to obtain a preformed body (green body), as well as the high reticulation of the sesquisiloxanic resin.

The mixture is co-pressed with a lightened steel plate consisting of a perimetric frame of the type illustrated in Figure 3. The frame is around 5.5 mm thick and delimits a single central lightening aperture.

In greater detail, a plate (or matrix) is used, with a through-going aperture of substantially rectangular perimetric section corresponding to the form to be taken by the body in ceramic matrix material. The aperture has a surface area of around 145 cm² and a depth of about 8 cm.

The operation begins by blocking the lower end of the through aperture, using the head of the punch with which the press is provided. The aperture is then filled with the mixture and the upper end closed with the lightened steel plate described above and another closure element with which the pressing system is provided. The quantity of mixture is defined in function of the final thickness of the brake pad, taking into account that following pressing there is a volume reduction of about 2/3. After positioning the plate appropriately, pressing is carried out by activating the punch.

The temperature inside the mould is maintained around 120°C. The maximum pressure applied during pressing is around 300 Kg/cm². Three consecutive cycles of application and release of force are envisaged, each lasting about 30 seconds (15 seconds of application and 15 seconds of release). There follows a final step of continuous application of force (without release) for approximately 90 seconds. The overall pressing step requires a period of approximately 3 minutes.

There follows a step of pyrolysis in an isothermal kiln with nitrogen flow of approximately 0.2 m³/h. The preformed body is heated from ambient temperature (25°C) to approximately 500°C at a velocity of approximately 5°C/min and kept at 500°C for approximately 4 hours.

The friction portion in ceramic matrix material lastly undergoes a finishing work process aimed at reducing thickness in function of the brake pad's end use.

The brake pad thus obtained has a thickness of 16.4 mm (including the thickness of the frame which is about 5.5 mm) and a total weight of around 820 grams, of which 480 grams is the weight of the friction portion in ceramic matrix material and the remaining 340 grams of the frame and the part of friction material filling the single central lightening aperture.

A traditional brake pad of the same form and functionality weighs around 1.180 grams. The brake pad in accordance with the invention therefore offers a weight reduction of around 30.5%.

On completion of the pressing step all the ceramic matrix materials obtained following examples 1 to 3 and 4 to 6 above demonstrated such excellent consistency as to facilitate the achievement of good details (e.g. sharp edges of the brake pad) and manipulation without particular difficulties. On completion of the pyrolysis step the materials evinced good properties of mechanical resistance (mechanical resistance module between 12 and 18 MPa; elastic module between 5 and 10 GPa). The average density of the materials was between 2.9 and 3.2 g/cm³. The average degree of ceramisation was evaluated at approximately 70%.

Braking tests were carried out on the brake brake pads made according to the invention with view to evaluating performances in terms of friction coefficient, of coefficient stability in function of the number of brake applications and of wear resistance.

The tests consisted in subjecting the samples to series of 50 braking operations.

The tests were carried out using braking systems provided with discs in both cast iron and composite ceramic material (CCM).

The tests showed no important differences in behaviour between the application with cast iron discs and the application with discs in CCM.

The tests revealed overall an average friction coefficient of approximately 0.45 from the fifth to the thirtieth application of the brakes. The value is fairly variable, with a minimum of approximately 0.42 and a maximum of approximately 0.48. After the thirtieth application of the brakes the friction coefficient decreased slightly, settling at an average value of approximately 0.42. For each application of the brakes there was average wear of approximately 0.005 mm.

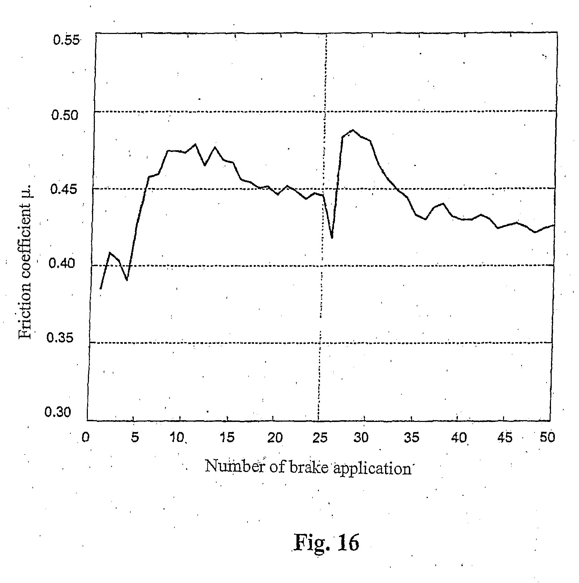

The graph in Figure 16 (number of brake application in abscissa and friction coefficient value in ordinate) regards tests carried out on a system with cast iron disc and a brake pad whose friction component is in the ceramic matrix material of Example 1 above.

This invention therefore considerably reduces the weight of brake pads for braking systems, in particular for disc brake systems, with at least the friction portion in ceramic matrix material, without compromising mechanical resistance.

This invention therefore considerably reduces working time for the production of a friction component in ceramic matrix material: from an average overall time of approximately 60-80 hours (without considering assembly with the metal support) to an average time of approximately 8-12 hours.

The ceramic matrix friction material made with the method proposed in the invention offers performances, in terms of friction coefficient and wear resistance, that are at least equivalent if not superior to those of traditional ceramic matrix friction materials. The friction coefficient found in the invention materials is in fact on average 0.42 - 0.45 as against the values of traditional materials, which are approximately 0.35 - 0.4.

Analogous considerations are valid with regard to wear resistance. In the invention materials, average wear values are approximately 0.005 mm/brake application, as against the values of traditional materials that are approximately 0.015 - 0.020.

Braking tests further evidenced that the brake pads in accordance with the various forms of implementing this invention have appropriate resistance to the mechanical stresses generated by the braking system actuators and the transmission of braking power.

The method according to the invention moreover permits simplification of brake pad and metal support plate production by cutting out the specific step of final assembly of friction component in ceramic matrix material and metal support plate.

Thus conceived, the invention has achieved its initial goals.

## Claims

1. Brake pad for braking systems, in particular for disc brakes, comprising a friction portion (10) tribologically active and a mechanical support portion (20) intended to cooperate with actuating means of a braking system, at least said friction portion (10) being made from a ceramic matrix material obtained through a process comprising the following operational steps:
- preparing a mixture of at least one siliconic type ceramic precursor, of particles of hard materials suitable as abrasives, of particles of substances suitable as lubricants and particles of metal materials, wherein the mixture consists of: ceramic precursor and catalyst between 5 and 10% by weight; abrasives between 20% and 30% by weight; metal materials not greater than 60% by weight; lubricants not greater than 50% by weight;
- hot-pressing the mixture to obtain a preformed body;
- submitting said preformed body to a process of pyrolysis in order to achieve ceramisation of the preceramic binder, thus obtaining said ceramic matrix material;
said mixture comprising a catalyst suitable for favouring reticulation of said ceramic precursor during said hot-pressing step and said pyrolysis step being carried out at temperatures below 800°C.

2. Brake pad according to claim 1, wherein said pyrolysis process is carried out reaching at maximum temperatures between 400 and 600°C.

3. Brake pad according to claim 1 or 2, wherein said pressing step is carried out at temperatures between 120°C and 150°C and/or said pressing step is carried out at pressures between 250 and 500 Kg/cm².

4. Brake pad according to one or more of the previous claims, wherein said mechanical support portion (20) is made from said ceramic matrix material, preferably said mechanical support portion (20) being made as one piece with said friction portion (10).

5. Brake pad according to claim 4, comprising a reinforcing element with lightening apertures, incorporated in said mechanical support portion (20) or arranged on the external surface of this portion (20), preferably said reinforcing element being associated with said mechanical support portion (20) for co-pressing during said hot-pressing step.

6. Brake pad according to one or more of the claims from 1 to 3, wherein said mechanical support portion (20) consists of a support plate 21, provided with one or more lightening apertures (25, 26) and associated with said friction portion (10), preferably said one or more lightening apertures (25, 26) being made in the portion of said support plate (21) intended to be coupled with said friction portion (10).

7. Brake pad according to claim 6, wherein said support plate (21) comprises a perimetric frame (22) that internally delimits an empty space (26), preferably said support plate (21) comprising a plate-like element (23) suitable for closing the empty space (26) of said perimetric frame (22) and in correspondence to which said lightening apertures (25) are made.

8. Brake pad according to claim 6 or 7, wherein said support plate (20) is in metal, preferably steel, or in non-metallic material, preferably a composite based on low heat conductivity oxides.

9. Brake pad according to one or more of the claims from 1 to 3, wherein said mechanical support portion (20) consists of a support plate (21) in non-metallic material, associated with said friction portion (10).

10. Brake pad according to one or more of the claims from 6 to 9, wherein said friction portion (10) is associated with said support plate (21) by co-pressing during said hot-pressing step or subsequently to said pyrolysis step.

11. Brake pad according to any of the previous claims, wherein said at least one ceramic precursor is selected from the polysiloxanes, and preferably from the sesquisiloxanes.

12. Brake pad according to any of the previous claims, wherein said abrasive particles are present as powders of two different particle sizes, the ratio of the average diameters of the two powders being between 9 and 11, preferably the abrasive powders in said two different particle sizes having an average diameter between 1 µm and 600 µm.

13. Brake pad according to claim 12, wherein the weight ratio between the abrasive powder of greater particle size and the powder of lesser particle size is between 0.8 and 1.8.

14. Brake pad according to any of the previous claims, wherein graphite is present in a percentage between 9% and 13% in weight of said mixture.

## Patentansprüche

1. Bremsbelag für Bremssysteme, insbesondere für Scheibenbremsen, umfassend
einen Reibabschnitt (10), der tribologisch beansprucht ist, und einen mechanischen Stützabschnitt (20), der dazu gedacht ist, mit Betätigungsmitteln eines Bremssystems zusammenzuwirken, wobei zumindest der Reibabschnitt (10) aus einem keramischen Matrixwerkstoff hergestellt ist, der durch ein Verfahren erzeugt wird, das folgende Verfahrensschritte umfasst:
- Zubereiten einer Mischung aus wenigstens einem Silizium-Keramikausgangswerkstoff, aus Partikeln harter Werkstoffe, die als Schleifmittel geeignet sind, aus Partikeln von Substanzen, die als Schmiermittel geeignet sind, und aus Partikeln von Metallwerkstoffen, wobei die Mischung aus Folgendem besteht:
Keramikausgangswerkstoff und Katalysator zwischen 5 und 10% des Gewichts; Schleifmittel zwischen 20% und 30% des Gewichts;
Metallwerkstoffe nicht mehr als 60% des Gewichts; Schmiermittel nicht mehr als 50% des Gewichts;
- Warmpressen der Mischung, um einen vorgeformten Körper zu erzielen;
- Unterwerfen des vorgeformten Körpers einem Pyrolyseverfahren, um die Keramisierung des präkeramischen Binders zu erzielen, wodurch der keramische Matrixwerkstoff erzielt wird;
wobei die Mischung einen Katalysator umfasst, der geeignet ist, die Vernetzung des keramischen Ausgangswerkstoffs während des Warmpressschrittes und des Pyrolyseschritts, der bei Temperaturen unterhalb von 800°C ausgeführt wird, zu begünstigen.

2. Bremsbelag gemäß Anspruch 1,
wobei das Pyrolyseverfahren bei der Ausführung maximale Temperaturen zwischen 400 und 600°C erreicht.

3. Bremsbelag nach Anspruch 1 oder 2,
wobei der Pressschritt bei Temperaturen zwischen 120°C und 150°C und/oder der Pressschritt bei Drücken zwischen 250 und 500 kg/cm² ausgeführt wird.

4. Bremsbelag nach einem der vorangehenden Ansprüche,
wobei der mechanische Stützabschnitt (20) aus dem keramischen Matrixwerkstoff hergestellt ist, wobei der mechanische Stützabschnitt (20) bevorzugt mit dem Reibabschnitt (10) einstückig hergestellt ist.

5. Bremsbelag gemäß Anspruch 4, umfassend
ein Verstärkungselement mit Gewichtsverminderungsöffnungen, die in dem mechanischen Stützabschnitt (20) oder an der Außenfläche dieses Abschnitts (20) ausgebildet sind, wobei das Verstärkungselement vorzugsweise mit dem mechanischen Stützabschnitt (20) für das gemeinsame Pressen mit diesem während des Warmpressens verbunden wird.

6. Bremsbelag nach einem oder mehreren der vorangehenden Ansprüche 1 bis 3,
wobei der mechanische Stützabschnitt (20) aus einer Stützplatte (21) besteht, die mit einer oder mehreren Gewichtsverminderungsöffnungen (25, 26) versehen ist und mit dem Reibabschnitt (10) verbunden ist, wobei vorzugsweise die eine oder die mehreren Gewichtsverminderungsöffnungen (25, 26) in dem Abschnitt der Stützplatte (21) ausgebildet ist/sind, der dazu gedacht ist, mit dem Reibabschnitt (10) verbunden zu werden.

7. Bremsbelag gemäß Anspruch 6,
wobei die Stützplatte (21) einen Umfangsrahmen (22) umfasst, der innen einen Freiraum (26) begrenzt, wobei die Stützplatte (21) vorzugsweise ein plattenförmiges Element (23) umfasst, das zum Verschließen des Freiraums (26) des Umfangsrahmens (22) geeignet ist und dementsprechend die Gewichtsverminderungsöffnungen (25) ausgebildet sind.

8. Bremsbelag gemäß Anspruch 6 oder 7,
wobei die Stützplatte (20) aus Metall, vorzugsweise aus Stahl oder einem nicht-metallischen Werkstoff, vorzugsweise einem Verbundwerkstoff, der auf Oxiden mit geringer Wärmeleitung basiert, hergestellt ist.

9. Bremsbelag nach einem oder mehreren der vorangehenden Ansprüche 1 bis 3,
wobei der mechanische Stützabschnitt (20) aus einer Stützplatte (21) aus einem nicht-metallischen Werkstoff besteht, die mit dem Reibabschnitt (10) verbunden ist.

10. Bremsbelag nach einem oder mehreren der vorangehenden Ansprüche 6 bis 9,
wobei der Reibabschnitt (10) mit der Stützplatte (21) durch gemeinsames Pressen während des Warmpressschritts oder nach dem Pyrolyseschritt verbunden wird.

11. Bremsbelag nach einem der vorangehenden Ansprüche,
wobei der wenigstens eine keramische Ausgangsstoff aus den Polysiloxanen und insbesondere aus den Sesquisiloxanen gewählt ist.

12. Bremsbelag nach einem der vorangehenden Ansprüche,
wobei die Reibpartikel in Pulverform mit zwei unterschiedlichen Partikelgrößen vorliegen, wobei das Verhältnis der durchschnittlichen Durchmesser der zwei Pulver zwischen 9 und 11 liegt, wobei vorzugsweise die Reibpulver der zwei unterschiedlichen Partikelgrößen einen Durchschnittsdurchmesser zwischen 1µm und 600 µm aufweisen.

13. Bremsbelag gemäß Anspruch 12,
wobei das Gewichtsverhältnis zwischen dem Reibpulver mit größerer Partikelgröße und dem Pulver mit geringerer Partikelgröße zwischen 0,8 und 1,8 liegt.

14. Bremsbelag nach einem der vorangehenden Ansprüche,
wobei Graphit mit einem Anteil zwischen 9% und 13% des Gewichts der Mischung vorliegt.

## Revendications

1. Patin de frein pour systèmes de freinage, en particulier pour freins à disque, comprenant une partie de frottement (10) active de manière tribologique et une partie de support mécanique (20) destinée à coopérer avec un moyen d'actionnement d'un système de freinage, au moins ladite partie de frottement (10) étant composée à partir d'un matériau de matrice céramique obtenu par un processus comprenant les étapes opérationnelles suivantes :
- préparation d'un mélange d'au moins un précurseur céramique de type silicone, de particules de matériaux durs utilisables comme abrasifs, de particules de substances utilisables comme lubrifiants et de particules de matériaux métalliques, dans laquelle le mélange est constitué de : précurseur céramique et catalyseur entre 5 et 10 % en poids ; abrasifs entre 20 % et 30 % en poids ; matériaux métalliques non supérieurs à 60 % en poids ; lubrifiants non supérieurs à 50 % en poids ;
- pressage à chaud du mélange pour obtenir un corps préformé ;
- soumission dudit corps préformé à un processus de pyrolyse afin d'obtenir une céramisation du liant précéramique, obtenant ainsi ledit matériau de matrice céramique ;
ledit mélange comprenant un catalyseur approprié pour favoriser la réticulation dudit précurseur céramique durant ladite étape de pressage à chaud et ladite étape de pyrolyse étant réalisée à des températures inférieures à 800 °C.

2. Patin de frein selon la revendication 1, dans lequel ledit processus de pyrolyse est réalisé en atteignant des températures maximales comprises entre 400 et 600 °C.

3. Patin de frein selon la revendication 1 ou 2, dans lequel ladite étape de pressage est réalisée à des températures comprises entre 120 °C et 150 °C et/ou ladite étape de pressage est réalisée à des pressions comprises entre 250 et 500 Kg/cm².

4. Patin de frein selon une ou plusieurs des revendications précédentes, dans lequel ladite partie de support mécanique (20) est composée à partir dudit matériau de matrice céramique, de préférence ladite partie de support mécanique (20) étant fabriquée d'un seul tenant avec ladite partie de frottement (10).

5. Patin de frein selon la revendication 4, comprenant un élément de renforcement avec des ouvertures d'allégement, incorporées dans ladite partie de support mécanique (20) ou agencées sur la surface externe de cette partie (20), de préférence ledit élément de renforcement étant associé à ladite partie de support mécanique (20) pour co-pressage durant ladite étape de pressage à chaud.

6. Patin de frein selon une ou plusieurs des revendications 1 à 3, dans lequel ladite partie de support mécanique (20) est constituée d'une plaque de support (21), pourvue d'une ou de plusieurs ouvertures d'allégement (25, 26) et associée à ladite partie de frottement (10), de préférence lesdites une ou plusieurs ouvertures d'allégement (25, 26) étant créées dans la partie de ladite plaque de support (21) destinée à être couplée à ladite partie de frottement (10).

7. Patin de frein selon la revendication 6, dans lequel ladite plaque de support (21) comprend un cadre périphérique (22) qui délimite intérieurement un espace vide (26), de préférence ladite plaque de support (21) comprenant un élément en forme de plaque (23) approprié pour fermer l'espace vide (26) dudit cadre périphérique (22) et en correspondance avec lequel lesdites ouvertures d'allégement (25) sont créées.

8. Patin de frein selon la revendication 6 ou 7, dans lequel ladite plaque de support (20) est en métal, de préférence en acier, ou en matériau non métallique, de préférence un composite à base d'oxydes à faible conductivité thermique.

9. Patin de frein selon une ou plusieurs des revendications 1 à 3, dans lequel ladite plaque de support mécanique (20) comprend une plaque de support (21) en matériau non métallique, associée à ladite partie de frottement (10).

10. Patin de frein selon une ou plusieurs des revendications 6 à 9, dans lequel ladite partie de frottement (10) est associée à ladite plaque de support (21) par co-pressage durant ladite étape de pressage à chaud ou à la suite de ladite étape de pyrolyse.

11. Patin de frein selon l'une quelconque des revendications précédentes, dans lequel ledit au moins un précurseur céramique est sélectionné parmi les polysiloxanes, et de préférence parmi les sesquisiloxanes.

12. Patin de frein selon l'une quelconque des revendications précédentes, dans lequel lesdites particules abrasives sont présentes en tant que poudres de deux tailles de particule différentes, le rapport des diamètres moyens des deux poudres étant compris entre 9 et 11, de préférence les poudres abrasives desdites deux tailles de particule différentes ayant un diamètre moyen compris entre 1 µm et 600 µm.

13. Patin de frein selon la revendication 12, dans lequel le rapport de poids entre la poudre abrasive de taille de particule plus élevée et la poudre de taille de particule plus petite est compris entre 0,8 et 1,8.

14. Patin de frein selon l'une quelconque des revendications précédentes, dans lequel du graphite est présent en un pourcentage compris entre 9 % et 13 % en poids dudit mélange.
